# EUROPEAN PATENT SPECIFICATION

(11) **EP 4 538 840 B1**
(45) Date of publication and mention of the grant of the patent: **24.06.2026**
(21) Application number: 24730855.4
(22) Date of filing: 30.05.2024
(51) Int. Cl.: H04M 1/02, G06F 1/16, G06F 3/04886, G06F 3/14, G09G 5/00

(54) **ELECTRONIC DEVICE FOR DISPLAYING ONE OR MORE SCREENS ON BASIS OF STATE AND METHOD THEREFOR**
ELEKTRONISCHE VORRICHTUNG ZUR ANZEIGE EINES ODER MEHRERER BILDSCHIRME AUF BASIS DES ZUSTANDES UND VERFAHREN DAFÜR
DISPOSITIF ÉLECTRONIQUE POUR AFFICHER UN OU PLUSIEURS ÉCRANS SUR LA BASE D'UN ÉTAT ET PROCÉDÉ ASSOCIÉ

(30) Priority: 18.08.2023 KR 20230108653; 06.09.2023 KR 20230118652
(43) Date of publication of application: 16.04.2025
(73) Proprietor: Samsung Electronics Co., Ltd., Suwon-si, Gyeonggi-do 16677 (KR)
(72) Inventor: BANG, Hyosang, Suwon-si, Gyeonggi-do 16677 (KR); PARK, Jihea, Suwon-si, Gyeonggi-do 16677 (KR)
(74) Representative: Gulde & Partner
(86) International application number: PCT/KR2024/007391
(87) International publication number: WO 2025/041981

(56) References cited:
- KR-A- 20210 021 896
- KR-A- 20210 044 975
- KR-A- 20210 117 605
- KR-A- 20210 145 958
- KR-A- 20220 033 262

## Description

### [Technical Field]

The present disclosure relates to an electronic device for displaying one or more screens based on a state and a method thereof.

### [Background Art]

The shapes and/or sizes of electronic devices are diversifying. In order to enhance mobility, an electronic device with reduced size and/or reduced volume are being designed. The electronic device may include a display for visualizing information. As the number of functions supported by the electronic device increases, the size of the display may increase to visualize more information to a user and/or to support execution of the functions. For example, the electronic device may be designed to maintain or increase the size of the display while reducing the size and/or volume of the electronic device. Electronic devices with foldable displays and having two or three housings are disclosed in KR 2021 0044975 A and KR 2021 0021896 A.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

An electronic device according to claim 1 is provided.

A method of an electronic device according to claim 12 is provided.

An electronic device according to claim 1 comprises a foldable housing including a first housing; a second housing rotatably coupled to the first housing, and a third housing rotatably coupled to the second housing; a first display disposed on a first side of the foldable housing; a second display disposed on a second side of the foldable housing and including a first display area, a second display area and a third display; a first sensor for detecting an angle between the first housing and the second housing; a second sensor for detecting an angle between the second housing and the third housing;memory storing instructions; and at least one processor for executing the instructions, wherein the at least processor, when executing the instructions, causes the device to: display, via the first display, a first execution screen of a first application in a folded state of the electronic device; identify that a state of the electronic device is changed from the folded state to a partially folded state based on the sensor information provided by the first sensor and/or the second sensor; display, on at least one display area of the second display, a plurality of visual objects respectively corresponding to recently executed applications. The electronic device is characterised in that, in response to identifying that the state of the electronic device is changed from the partially-folded state to an unfolded state, without a user input with respect to the plurality of visual objects, display a second screen of the first application in at least one display area of the first display area, the second display area, and the third display area of the second display; and in that, based on a state of the electronic device switched to an unfolded state from the partially-folded state after receiving the user input with respect to the plurality of visual objects, display at least one screen corresponding to the user input in at least one of the first display area, the second display area and the third display area of the second display.

A method of an electronic device according to claim 12 comprises the steps of: displaying, via a first display of the electronic device, a first execution screen of a first application in a folded state of the electronic device; identifying that a state of the electronic device is changed from the folded state to a partially-folded state based on sensor information provided by a first sensor and/or the second sensor; displaying, on at least one display area of a second display, a plurality of visual objects respectively corresponding to recently executed applications. The method is characterised by the steps of: in response to identifying that the state of the electronic device is changed from the partially-folded state to a unfolded state, without a user input with respect to the plurality of visual objects, displaying a second screen of the first application in at least one display area of a first display area, a second display area, and a third display area of the second display of the electronic device; and based on a state of the electronic device switched to an unfolded state from the partially-folded state after receiving the user input with respect to the plurality of visual objects, displaying at least one screen corresponding to the user input in at least one of the first display area, the second display area, and the third display area of the second display. Further advantageous features are defined in the dependent claims.

### [Description of the Drawings]

FIG. 1 illustrates an embodiment of an electronic device including a multi-foldable housing.
FIG. 2 illustrates an example of a block diagram of an electronic device according to an embodiment.
FIGS. 3A and 3B illustrate an embodiment of a deformable electronic device.
FIG. 4 illustrates an exemplary flowchart of an electronic device according to an embodiment.
FIGS. 5A, 5B, and 5C illustrate exemplary user interfaces (UIs) displayed by an electronic device in a sub-folded state.
FIGS. 6A, 6B, 6C, and 6D illustrate exemplary UIs of an electronic device displayed based on an input received in a sub-folded state.
FIGS. 7A and 7B illustrate exemplary UIs of an electronic device displayed based on an input received in a sub-folded state.
FIGS. 8A and 8B illustrate an exemplary UI of an electronic device displayed based on an input received in a sub-folded state.
FIG. 9 illustrates an exemplary flowchart of an electronic device according to an embodiment.
FIG. 10 illustrates an exemplary UI of an electronic device displayed based on an input received in a folded state.
FIG. 11 is a block diagram of an electronic device in a network environment according to various embodiments.

### [Mode for Invention]

Hereinafter, various embodiments of the present document will be described with reference to the accompanying drawings.

The various embodiments of the present document and terms used herein are not intended to limit the technology described in the present document to specific embodiments, and should be understood to include various modifications, equivalents, or substitutes of the corresponding embodiment. In relation to the description of the drawings, a reference numeral may be used for a similar component. A singular expression may include a plural expression unless it is clearly meant differently in the context. In the present document, an expression such as "A or B", "at least one of A and/or B", "A, B or C", or "at least one of A, B and/or C", and the like may include all possible combinations of items listed together. Expressions such as "first", "second", "first" or "second", and the like may modify the corresponding components regardless of order or importance, is only used to distinguish one component from another component, but does not limit the corresponding components. When a (e.g., first) component is referred to as "connected (functionally or communicatively)" or "accessed" to another (e.g., second) component, the component may be directly connected to the other component or may be connected through another component (e.g., a third component).

The term "module" used in the present document may include a unit configured with hardware, software, or firmware, and may be used interchangeably with terms such as logic, logic block, component, or circuit, and the like. The module may be an integrally configured component or a minimum unit or part thereof that performs one or more functions. For example, a module may be configured with an application-specific integrated circuit (ASIC).

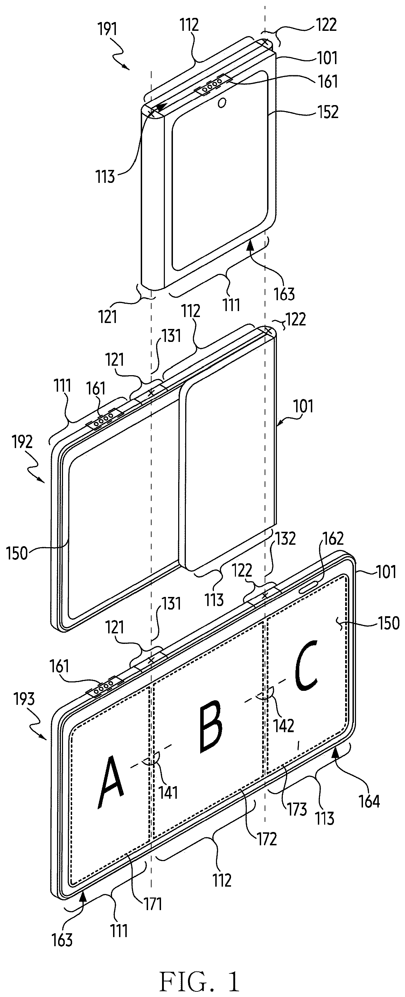

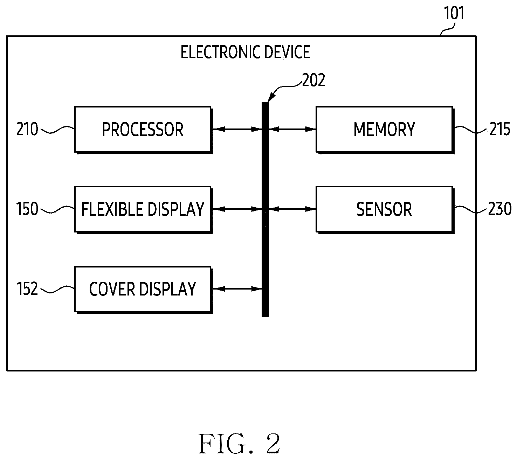

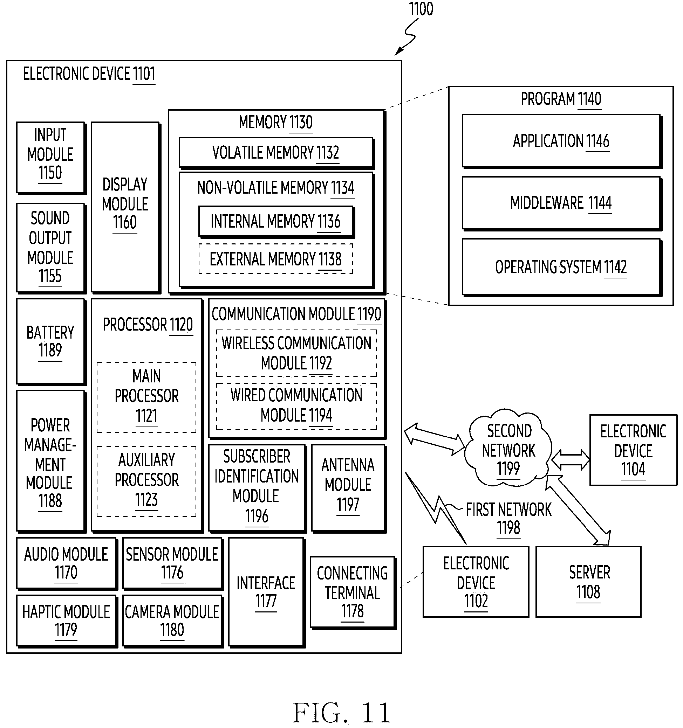

FIG. 1 illustrates an embodiment of an electronic device 101 including a multi-foldable housing. In an embodiment, in terms of being owned by a user, the electronic device 101 may be referred to as a terminal (or user terminal). The terminal may include, for example, a personal computer (PC), such as a laptop and a desktop. The terminal may include, for example, a smartphone, a smartpad, and/or a tablet PC. The terminal may include a smart accessory such as a smartwatch and/or a head-mounted device (HMD). An example of a hardware configuration included in the electronic device 101 is described with reference to FIGS. 2 and/or 11.

Referring to FIG. 1, the electronic device 101 according to an embodiment may include a deformable housing. The housing of the electronic device 101 may be referred to as a multi-foldable housing (or foldable housing). The multi-foldable housing of the electronic device 101 may be divided into a plurality of housings (assemblies and/or fabrications). In one or more embodiments, the multi-foldable housing of the electronic device 101 of FIG. 1 may include a first housing 111, a second housing 112, and a first hinge assembly 121 for rotatably coupling the first housing 111 and the second housing 112. Based on the first hinge assembly 121, a relative position, angle, shape, and/or distance of the first housing 111 and the second housing 112, which are rigid bodies, may be changed by an external force. The second housing 112 may be rotatably coupled to the first housing 111.

The multi-foldable housing of the electronic device 101 may include the second housing 112, a third housing 113, and a second hinge assembly 122 for rotatably coupling the second housing 112 and the third housing 113. Based on the second hinge assembly 122, a relative position, angle, shape, and/or distance of the second housing 112 and the third housing 113 may be changed by the external force. Based on the first hinge assembly 121 and the second hinge assembly 122, the electronic device 101 may have a structure that may be folded once or more. In an embodiment, the first housing 111, the second housing 112, and the third housing 113 may be referred to as a housing assembly, a housing part, a sub-housing, a flat housing, and/or a rigid housing. In an embodiment, a hinge assembly including the first hinge assembly 121 and the second hinge assembly 122 may be referred to as a hinge device. The third housing 113 may be rotatably coupled to the second housing 112.

Referring to FIG. 1, a first folding axis 131 formed along a longitudinal direction of the first hinge assembly 121 and/or a second folding axis 132 formed along a longitudinal direction of the second hinge assembly are illustrated. The first folding axis 131 may be a rotation axis of the first housing 111 and the second housing 112 connected through the first hinge assembly 121, and may be formed in the first hinge assembly 121. As the first housing 111 and/or the second housing 112 are rotated based on the first folding axis 131, a first angle 141 between the first housing 111, the first hinge assembly 121, and the second housing 112 may be changed. The second folding axis 132 is a rotation axis of the second housing 112 and the third housing 113 connected through the second hinge assembly 122 and may be formed in the second hinge assembly 122. As the second housing 112 and/or the third housing 113 are rotated based on the second folding axis 132, a second angle 142 between the second housing 112, the second hinge assembly 122, and the third housing 113 may be changed. In terms of including a plurality of deformable folding axes, such as the first folding axis 131 and the second folding axis 132, the electronic device 101 may be referred to as a multi-foldable electronic device.

Referring to FIG. 1, different states 191, 192 and 193 of the electronic device 101 divided by a shape and/or exterior are illustrated. Referring to the state 191 of FIG. 1, the electronic device 101 may include a cover display 152 positioned on a first surface (e.g., a front surface of the electronic device 101) of the first housing 111. Referring to the states 192 and 193 of FIG. 1, the electronic device 101 according to an embodiment may include a flexible display 150 positioned on a second surface of the first housing 111 (e.g., a second surface opposite to the first surface of the first housing 111), a third surface of the second housing 112, and a fourth surface of the third housing 113. The second surface of the first housing 111, the third surface of the second housing 112, and the fourth surface of the third housing 113 may form a rear surface (or back surface) of the electronic device 101.

Referring to FIG. 1, the flexible display 150 may extend from the second surface of the first housing 111 to the fourth surface of the third housing 113 across the third surface of the second housing 112. In one or more embodiments, the flexible display 150 may be positioned from the first housing 111 to the third housing 113 across the first hinge assembly 121, the second housing 112, and the second hinge assembly 122. Hereinafter, the first angle 141 may correspond to an angle between the second surface of the first housing 111 and the third surface of the second housing 112 on which the flexible display 150 is positioned, which may be folded by the first folding axis 131 of the first hinge assembly 121. Hereinafter, the second angle 142 may correspond to an angle between the third surface of the second housing 112 and the fourth surface of the third housing 113 on which the flexible display 150 is positioned, which may be folded by the second folding axis 132 of the second hinge assembly 122.

In one or more embodiments, the flexible display 150 may be referred to as a display, a deformable display, and/or a deformable panel. In terms of size, the flexible display 150 may be referred to as a large display, and the cover display 152 may be referred to as a small display. In terms of location, the flexible display 150 may be referred to as a rear display (or front display) and/or an inner display, and the cover display 152 may be referred to as a front display (or rear display) and/or an outer display. In terms of deformability, the flexible display 150 may be referred to as a deformable display, and the cover display 152 may be referred to as a rigid display.

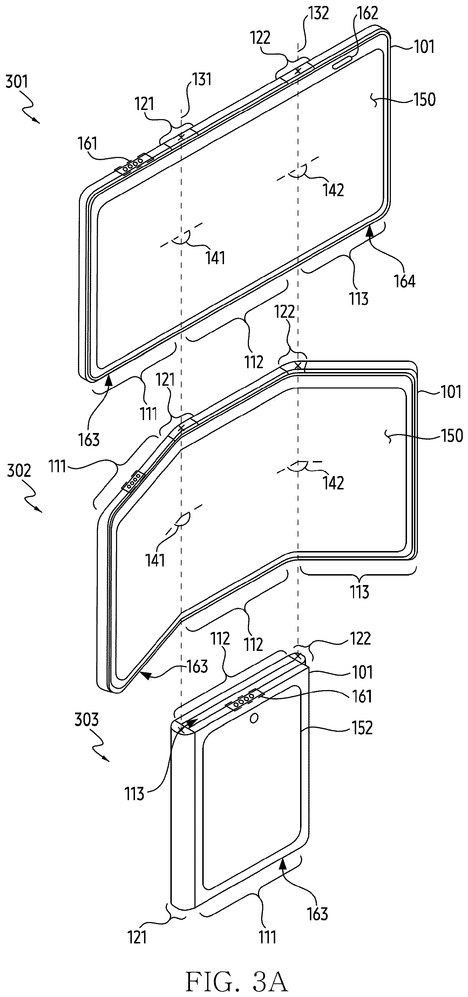

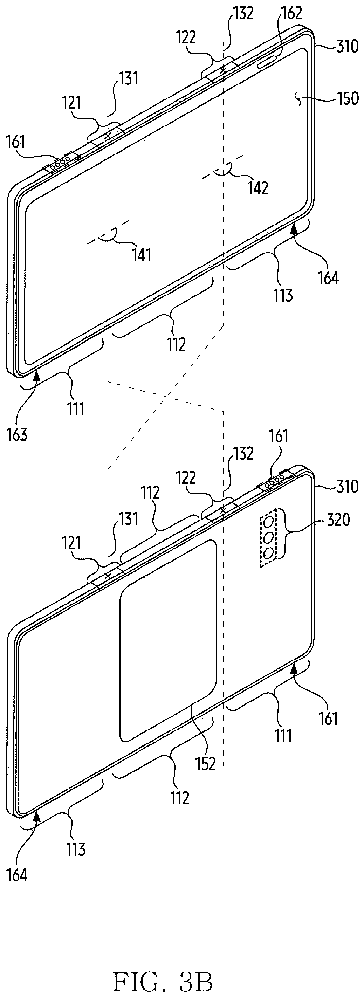

In one or more embodiments, the cover display 152 may be referred to as a first display, and the flexible display 150 may be referred to as a second display. The embodiment is not limited thereto, and the flexible display 150 may be referred to as the first display, and the cover display 152 may be referred to as the second display. An exemplary hardware configuration of the electronic device 101 including the flexible display 150 and/or the cover display 152 is described with reference to FIG. 2. An embodiment in which the cover display 152 is positioned on the first surface of the first housing 111 is described, but the embodiment is not limited thereto. An exemplary exterior of the electronic device 101 including the flexible display 150 and the cover display 152 is described with reference to FIGS. 3A and/or 3B.

The electronic device 101 according to an embodiment may organize one or more screens provided from a software application on a display (e.g., the flexible display 150 and/or the cover display 152). For example, the electronic device 101 in the state 191 of displaying a screen on the cover display 152 may be deformed by an external force. By the deformation, the state of the electronic device 101 may be sequentially switched from the state 191 to the state 192 and from the state 192 to the state 193.

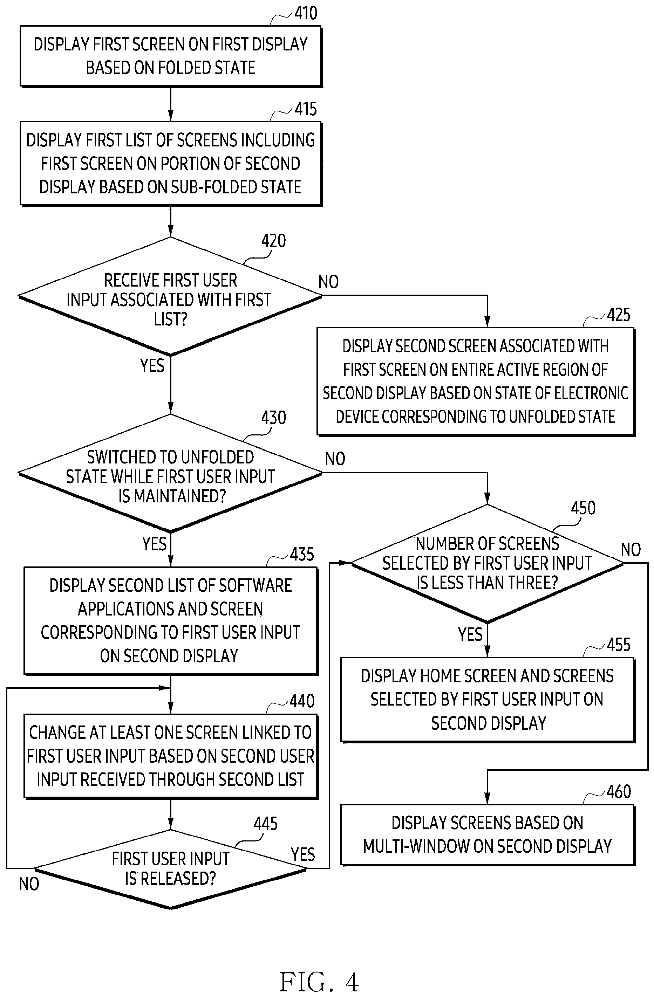

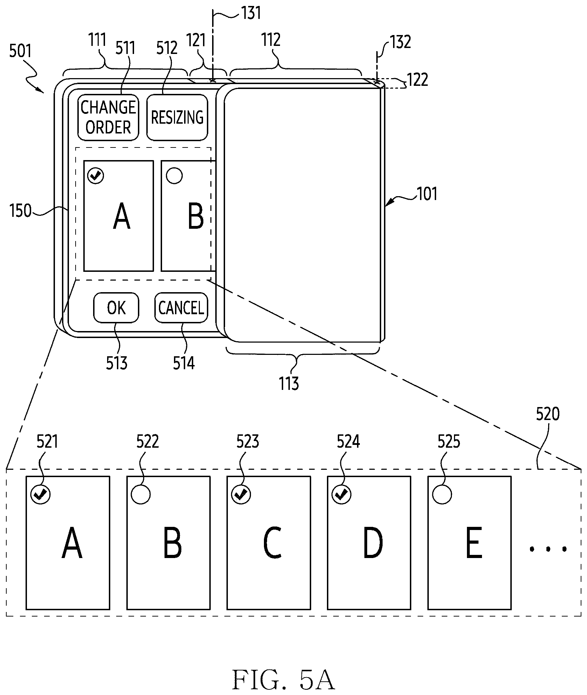

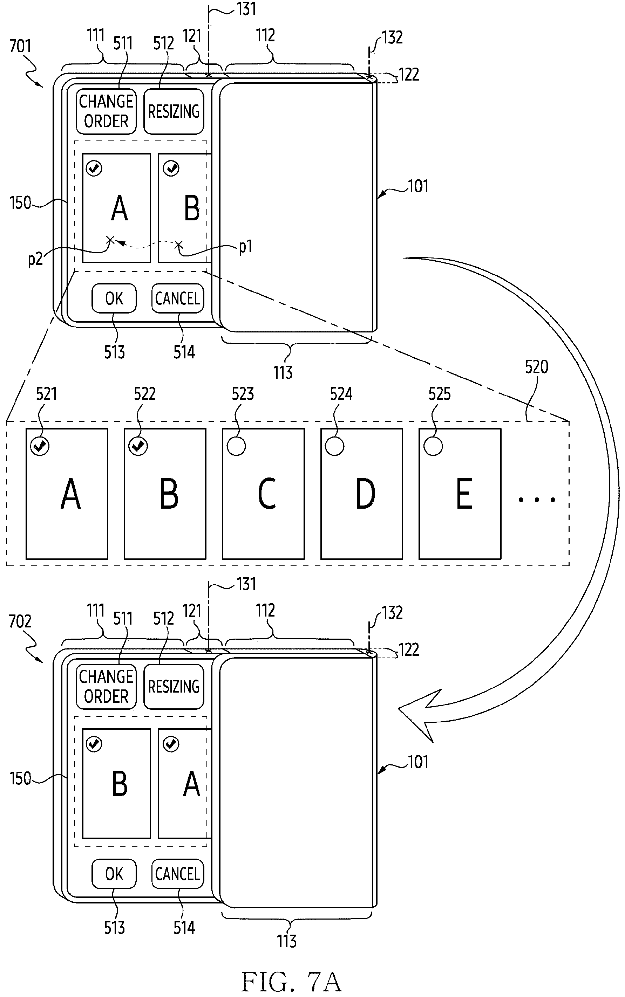

In the state 192, the electronic device 101 may display a user interface (UI) for organizing one or more screens to be displayed on the flexible display 150 in the state 193 following the state 192. The UI may include a list of one or more screens that have been displayed on the display (e.g., the flexible display 150 and/or the cover display 152) of the electronic device 101 before the state 192. From the perspective of displaying the screen that has been displayed by the electronic device 101, the UI may be referred to as a recent UI. The electronic device 101 according to an embodiment may select one or more screens to be displayed on the flexible display 150 in the state 193 after the state 192 from the list displayed in the state 192. For example, the electronic device 101 may select the one or more screens based on a user input received in the state 192. An operation of the electronic device 101 that determines one or more screens to be displayed on the flexible display 150 based on the UI displayed in the state 192 is described with reference to FIGS. 4 to 10. Various examples of the UI displayed in the state 192 are described with reference to FIGS. 5A to 5C and 7A to 7B.

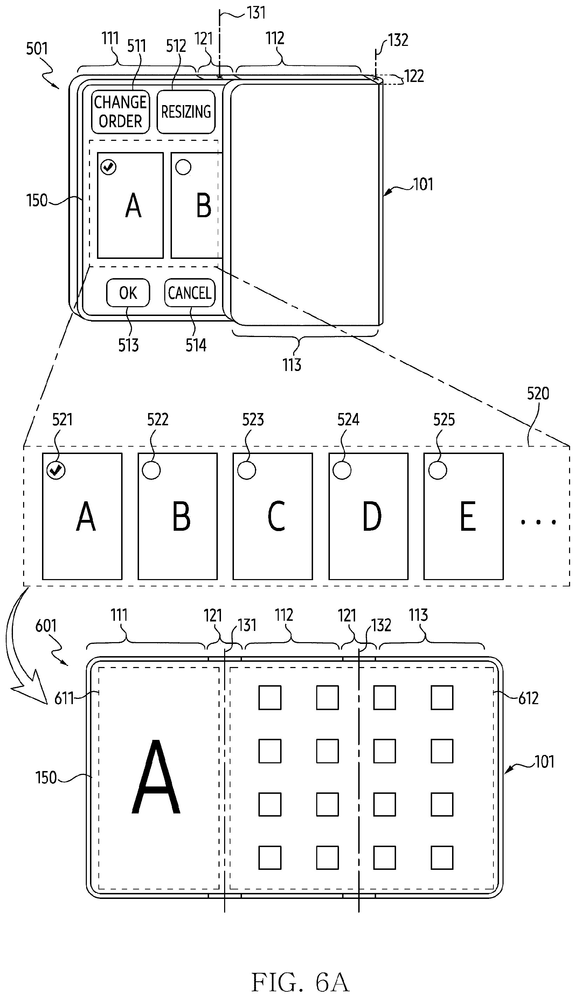

Referring to FIG. 1, in the state 193 after the state 192, the electronic device 101 may display a plurality of screens (e.g., screen A, screen B and/or screen C) on the flexible display 150. The plurality of screens may be designated by at least one user input associated with the UI that has been displayed in the state 192. The plurality of screens may be provided from each of different software applications executed by the electronic device 101. The electronic device 101 may display the plurality of screens in each of different portions 171, 172, and 173 of the flexible display 150. On the flexible display 150, the portions 171, 172, and 173 on which the plurality of screens are displayed may not overlap each other and may be separated from each other. A layout in which the plurality of screens are displayed on the portions 171, 172, and 173 of the flexible display 150 that do not overlap each other may be referred to as a picture-by-picture (PBP). Exemplary layouts of the plurality of screens displayed on the flexible display 150 are described with reference to FIGS. 6A to 6D.

As described above, the electronic device 101 according to an embodiment may execute a function for organizing one or more screens displayed on the display (e.g., the flexible display 150 and/or the cover display 152) based on the different states 191, 192, and 193 of the electronic device 101, which are divided by a shape of the multi-foldable housing. For example, the electronic device 101 may display a UI for organizing the one or more screens in the exemplary state 192 in which a portion of the flexible display 150 (e.g., a portion of the flexible display 150 positioned on the first housing 111) is exposed to an outside. Based on the UI, a user of the electronic device 101 may select a screen to be displayed on the display of the electronic device 101 having a relatively large size, such as the flexible display 150. In case of selecting the plurality of screens, the user of the electronic device 101 may change locations (or order) of the plurality of screens to be displayed on the flexible display 150 and/or sizes of each of the plurality of screens based on the UI.

Hereinafter, an example of a hardware configuration included in the electronic device 101 of FIG. 1 is described with reference to FIG. 2.

FIG. 2 illustrates an example of a block diagram of an electronic device 101 according to an embodiment. The electronic device 101 of FIG. 1 may include hardware of the electronic device 101 described with reference to FIG. 2. Referring to FIG. 2, the electronic device 101 according to an embodiment may include at least one of a processor 210, a memory 215, a flexible display 150, a cover display 152, or a sensor 230. The processor 210, the memory 215, the flexible display 150, the cover display 152, and the sensor 230 may be electronically and/or operably coupled with each other by an electronic component, such as a communication bus 202.

In an embodiment, the fact that the hardware components of the electronic device 101 are operably coupled may mean that a direct connection or an indirect connection between the hardware components is established wired or wirelessly such that a second hardware component is controlled by a first hardware component among the hardware components. Although illustrated based on different blocks, the embodiment is not limited thereto, and a portion of the hardware of FIG. 2 (e.g., at least a portion of the processor 210, the memory 215, and the sensor 230) may be included in a single integrated circuit, such as a system on a chip (SoC). The hardware components of the electronic device 101 divided into blocks may be located or included in at least one of a first housing 111, a second housing 112, or a third housing 113 described with reference to FIG. 1. The type and/or number of hardware components included in the electronic device 101 are not limited to those illustrated in FIG. 2. For example, the electronic device 101 may include only a portion of the hardware components illustrated based on the blocks of FIG. 2.

The processor 210 of the electronic device 101 according to an embodiment may include hardware and/or circuitry for processing data based on one or more instructions. The hardware and/or circuitry for processing data may include, for example, an arithmetic and logic unit (ALU), a floating point unit (FPU), a field programmable gate array (FPGA), a central processing unit (CPU), and/or an application processor (AP). The number of the processor 210 may be one or more. For example, the processor 210 may have a structure of a multi-core processor such as a dual core, a quad core, or a hexa core.

The memory 215 of the electronic device 101 according to an embodiment may include a hardware component for storing data and/or instruction inputted and/or outputted to and from the processor 210. The memory 215 may include, for example, a volatile memory such as a random-access memory (RAM) and/or a non-volatile memory such as a read-only memory (ROM). The volatile memory may include, for example, at least one of dynamic RAM (DRAM), static RAM (SRAM), Cache RAM, and pseudo SRAM (PSRAM). The non-volatile memory may include, for example, at least one of programmable ROM (PROM), erasable PROM (EPROM), electrically erasable PROM (EEPROM), flash memory, hard disk, compact disk, solid state drive (SSD), and embedded multi-media card (eMMC).

The flexible display 150 of the electronic device 101 according to an embodiment may output visualized information (e.g., screens of FIGS. 1, 5A to 5C, 6A to 6D, 7A to 7B, and 8A to 8B) to a user. For example, the flexible display 150 may output visualized information to the user by being controlled by a controller such as a graphic processing unit (GPU) and/or the processor 210. The flexible display 150 may include a liquid crystal display (LCD), a plasma display panel (PDP), and/or one or more light emitting diodes (LEDs). The LED may include an organic LED (OLED). The flexible display 150 may include an electronic paper. As described above with reference to FIG. 1, the flexible display 150 may have a shape that is at least partially curved and/or a deformable shape. Hereinafter, an active area and/or a display area of the flexible display 150 may correspond to at least a portion of the flexible display 150 including one or more activated pixels.

The flexible display 150 of the electronic device 101 according to an embodiment may include a sensor (e.g., a touch sensor panel (TSP)) for detecting an external object (e.g., a user's finger) on the flexible display 150. For example, based on the TSP, the electronic device 101 may detect an external object floating on the flexible display 150 or in contact with the flexible display 150. In response to detecting the external object, the electronic device 101 may execute a function associated with a specific visual object corresponding to a location of the external object on the flexible display 150 among visual objects displayed on the flexible display 150.

The cover display 152 of the electronic device 101 according to an embodiment may output visualized information to the user, similar to the flexible display 150. The cover display 152 may be positioned in a portion different from a portion of the electronic device 101 on which the flexible display 150 is positioned. In the description of the cover display 152, a portion overlapping the flexible display 150 may be omitted.

The sensor 230 of the electronic device 101 according to an embodiment may generate electrical information that may be processed by the processor 210 or stored in the memory 215 from non-electronic information associated with the electronic device 101. For example, the sensor 230 may include a global positioning system (GPS) sensor for detecting a geographic location of the electronic device 101. In addition to the GPS method, the sensor 230 may generate information indicating the geographic location of the electronic device 101 based on a global navigation satellite system (GNSS), such as Galileo, Beidou, and Compass, for example. The information may be stored in the memory 215, processed by the processor 210, and/or transmitted through a communication circuitry (not illustrated) to another electronic device distinct from the electronic device 101. The sensor 230 is not limited to the above description, and may include an image sensor, an illuminance sensor, a proximity sensor, a grip sensor, and/or a ToF sensor for detecting electromagnetic waves including light.

In one or more embodiments, the processor 210 of the electronic device 101 may sense or identify a posture, shape, and/or direction of the electronic device 101 by using the sensor 230. The sensor 230 may include an inertial measurement unit (IMU), a hall sensor, a proximity sensor, and/or an illuminance sensor for identifying the posture, shape, and/or direction of the electronic device 101. The hall sensor may include a magnet and a magnetic field sensor that measures a change in a magnetic field formed by the magnet. The magnet and the magnetic field sensor may be positioned in different assemblies (e.g., the first housing 111, the second housing 112, and/or the third housing 113 of FIG. 1) of the housing of the electronic device 101. Based on the change in the magnetic field measured by the magnetic field sensor, the hall sensor may output sensor data indicating a distance between the portions.

In one or more embodiments where the electronic device 101 includes a deformable housing, the processor 210 of the electronic device 101 may identify a shape of the housing or identify parameters (e.g., the first angle 141 and/or the second angle 142 of FIG. 1) associated with the shape by using the magnet positioned in different parts of the housing (e.g., the first housing 111, the second housing 112, and/or the third housing 113 of FIG. 1) and a hall sensor including the magnetic field sensor. For example, the hall sensor may output sensor data indicating the distance and/or the shape of the housing.

The IMU according to an embodiment may include an acceleration sensor, a gyro sensor, a geomagnetic sensor, or any combination thereof. The acceleration sensor may output an electrical signal indicating gravitational acceleration and/or acceleration of each of a plurality of axes (e.g., x-axis, y-axis, and z-axis) perpendicular to each other. The gyro sensor may output an electrical signal indicating an angular velocity (e.g., an angular velocity based on a roll, a pitch, and/or a yaw) of each of the plurality of axes. The geomagnetic sensor may output an electrical signal indicating a size of the magnetic field formed in the electronic device 101 along each of the plurality of axes (e.g., x-axis, y-axis, and/or z-axis). The processor 210 may repeatedly obtain data indicating acceleration, angular velocity, and/or the size of the magnetic field from the IMU based on a designated period (e.g., 1 millisecond). The processor 210 may identify parameters (e.g., the first angle 141 and/or the second angle 142 of FIG. 1) associated with the shape of the electronic device 101 by using the hall sensor and/or the IMU. Based on the parameters, the processor 210 may identify the current shape of the electronic device 101 from among designated shapes (e.g., the unfolded state, the folded state, and/or the sub-folded state, described with reference to FIGS. 3A and 3B) to divide the shape of the electronic device 101. For example, the processor 210 of the electronic device 101 may identify the first angle 141 between the first housing 111 and the second housing 112 of FIG. 1 and/or the second angle 142 between the second housing 112 and the third housing 113 by using the sensor 230.

Although not illustrated, the electronic device 101 according to an embodiment may include an output means for outputting information in a form other than the visualized form. For example, the electronic device 101 may include a motor for providing haptic feedback based on vibration. For example, the electronic device 101 may include one or more speakers for outputting an audio signal, such as a first speaker 161, a second speaker 162, a third speaker 163, or a fourth speaker 164 of FIGS. 3A to 3B.

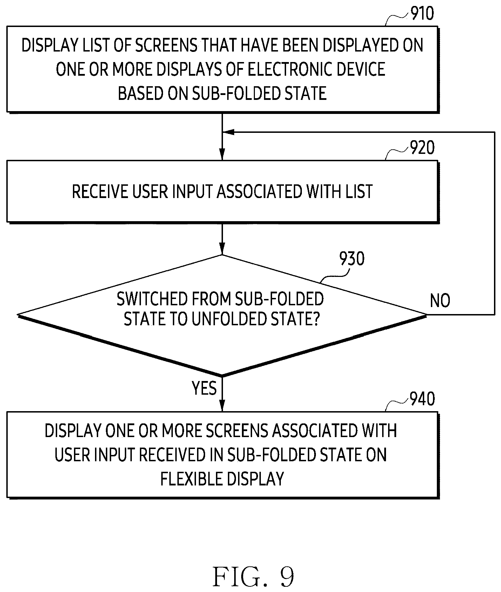

In the memory 215 of the electronic device 101 according to an embodiment, one or more instructions (or commands) indicating calculation and/or operation to be performed by the processor 210 on data may be stored. A set of one or more instructions may be referred to as firmware, operating system, process, routine, sub-routine, and/or application. For example, the electronic device 101 and/or the processor 210 may perform at least one of the operations of FIGS. 4 and/or 9 when a set of a plurality of instructions distributed in a form of the operating system, firmware, driver, and/or application are executed. Hereinafter, the fact that an application is installed in the electronic device 101 may mean that the one or more applications are stored in an executable format (e.g., a file with an extension designated by the operating system of the electronic device 101) by the processor 210 of the electronic device 101, as one or more instructions provided in a form of the application are stored in the memory 215 of the electronic device 101.

The processor 210 of the electronic device 101 according to an embodiment may selectively activate or turn on either the flexible display 150 or the cover display 152. The embodiment is not limited thereto, and the processor 210 may deactivate (or turn off) both the flexible display 150 and the cover display 152, or may activate (or turn on) both the flexible display 150 and the cover display 152. The processor 210 may activate either the flexible display 150 or the cover display 152 based on the shape of the multi-foldable housing of the electronic device 101 identified by the sensor 230. On the activated display, the processor 210 may display a screen provided from at least one software application executed by the processor 210.

In an embodiment, the processor 210 of the electronic device 101 may display a UI for organizing a screen to be displayed through either the flexible display 150 or the cover display 152. The UI may be displayed based on a specified form of the electronic device 101 (e.g., the form of the electronic device 101 illustrated with reference to the state 192 of FIG. 1) verified by the sensor 230. For example, while the electronic device 101 has the specified form, the processor 210 may display the UI on a portion of the flexible display 150. Based on the UI, the processor 210 may receive a user input for selecting one or more screens to be displayed on the flexible display 150. The processor 210 receiving the user input may display the one or more screens selected by the user input on an entire active region in case that the shape of the electronic device 101 changes to a shape that may use the entire active region of the flexible display 150 (e.g., the shape of the electronic device 101 illustrated with reference to the state 193 of FIG. 1) based on the sensor 230. Thus, the processor 210 may be configured to receive, while displaying a plurality of screens including the at least one screen on the first displaying area, the user input for selecting the at least one screen among the plurality of screens.

Hereinafter, different forms of the electronic device 101 sensed by the sensor 230 are exemplarily described with reference to FIGS. 3A and/or 3B.

FIGS. 3A and 3B illustrate an embodiment of a deformable electronic device 101. The electronic device 101 of FIGS. 1 and/or 2 may have an exterior of the electronic device 101 described with reference to FIGS. 3A and/or 3B.

Referring to FIGS. 3A and/or 3B, different shapes of the electronic device 101 supporting deformability based on a plurality of folding axes (e.g., the first folding axis 131 and/or the second folding axis 132) are illustrated. Referring to FIG. 3A, the electronic device 101 including a flexible display 150 that is completely visually covered by a first housing 111 to a third housing 113 folded along the first folding axis 131 and the second folding axis 132 is illustrated.

The electronic device 101 may include a first speaker 161 and/or a third speaker 163 positioned in the first housing 111. The electronic device 101 may include a second speaker 162 and/or a fourth speaker 164 positioned in the third housing 113. The third speaker 163 may be positioned at a second edge of the first housing 111 opposite to a first edge of the first housing 111 on which the first speaker 161 is positioned. The fourth speaker 164 may be positioned at a second edge of the third housing 113 opposite to a first edge of the third housing 113 on which the second speaker 162 is positioned. Although the second speaker 162 positioned on one surface of the third housing 113 where a flexible display 150 is positioned and the first speaker 161, the third speaker 163, and the fourth speaker 164 positioned on a side surface connected to a front surface of the electronic device 101 are exemplarily illustrated, the locations of speakers (e.g., the first speaker 161 to the fourth speaker 164) included in the electronic device 101 are not limited to the locations illustrated in FIG. 3A.

Referring to FIG. 3A, different states (e.g., a first state 301, a second state 302 and/or a third state 303) of the electronic device 101 divided by a first angle 141 and a second angle 142 are illustrated. The first state 301 of the electronic device 101 in which the first angle 141 and the second angle 142 are substantially a straight angle (e.g., about 180 °) may be referred to as a fully unfolded state, an outspread state, an opened state, an unfolded state, a flat state, and/or a planar state. In the first state 301, the flexible display 150 positioned from the first housing 111 across the second housing 112 to the third housing 113 may have a substantially flat shape. In the first state 301, a single plane may be formed on a front surface of the electronic device 101 on which the flexible display 150 is positioned. In the first state 301, directions of front surfaces of the first housing 111, the second housing 112, and the third housing 113 may be parallel to each other and/or the same. The state 193 of FIG. 1 may correspond to or be included in the first state 301 and/or the unfolded state of FIG. 3A.

Referring to FIG. 3A, the second state 302 of the electronic device 101 in which at least one of the first angle 141 or the second angle 142 is less than a straight angle is illustrated. The state of the electronic device 101, including the second state 302, in which the first angle 141 and/or the second angle 142 is less than the straight angle may be referred to as an in-folded state, a sub-outspread state (or a sub-folded state), an intermediate state, and/or a concave state. Although only a second hinge assembly 122 of a first hinge assembly 121 and the second hinge assembly 122 is illustrated as folded, the embodiment is not limited thereto, and the sub-folded state may include a state in which both the first angle 141 and the second angle 142 are less than the straight angle and exceed 0 °. In the sub-folded state, a plurality of planes may be formed by the flexible display 150 folded by at least one hinge assembly. In the sub-folded state, such as the second state 302, a boundary line between flat portions of the flexible display 150 may be formed on either of the first hinge assembly 121 and/or the second hinge assembly 122. In one or more embodiments, the flat portions of the flexible display 150 divided by the second hinge assembly 122 may face different directions that are not parallel. The state 192 of FIG. 1 may correspond to or be included in the second state 302, the sub-folded state and/or the in-folded state of FIG. 3A.

Referring to FIG. 3A, the third state 303 of the electronic device 101 in which both the first angle 141 and the second angle 142 are substantially 0 ° may be referred to as a fully folded state, a folded state, and/or a closed state. In the third state 303, the flexible display 150 may be completely visually occluded by the first housing 111 to the third housing 113. For example, in the folded state, a size of the flexible display 150 of the electronic device 101 exposed to the outside may be substantially zero. The state 191 of FIG. 1 may correspond to or be included in the third state 303 and/or the folded state of FIG. 3A. In the third state 303, both surfaces of the third housing 113 may be occluded by the first housing 111 and the second housing 112.

In a folded state such as the third state 303, the electronic device 101 including the flexible display 150 that is completely visually occluded may include the cover display 152 positioned on the rear surface opposite to the front surface on which the flexible display 150 is positioned. Referring to FIG. 3A, in the electronic device 101 according to an embodiment, one surface of the first housing 111 on which the flexible display 150 is positioned and another surface of the first housing 111 on which the cover display 152 is positioned may be opposite to each other.

The location of the cover display 152 is not limited to the first housing 111 illustrated in FIGS. 1 and/or 3A. Referring to FIG. 3B, the electronic device 310 may include the cover display 152 positioned on one surface of the second housing 112 (e.g., the other surface opposite to one surface of the second housing 112 on which the flexible display 150 is positioned) among the first housing 111, the second housing 112, and the third housing 113. The electronic device 310 including the cover display 152 positioned on one surface of the second housing 112 may include a plurality of cameras 320 positioned on a housing (e.g., the first housing 111) different from the second housing 112. The electronic device 310 of FIG. 3B may also be switched between the unfolded state, the sub-folded state, and/or the folded state divided by the first angle 141 and/or the second angle 142. In FIGS. 5A to 5C, 6A to 6D, 7A to 7B, and 8A to 8B, an embodiment based on the electronic device 101 of FIG. 3A is described, but the electronic device 310 of FIG. 3B may also perform the operation of the electronic device 101 described with reference to the above drawings.

The electronic device 101 including the flexible display 150 configured to be folded at an angle of less than or equal to the straight angle along the first folding axis 131 and the second folding axis 132, which is described with reference to FIGS. 3A to 3B, may be referred to as a G-shaped foldable electronic device.

The electronic device (e.g., the electronic device 101 of FIG. 3A and/or the electronic device 310 of FIG. 3B) according to an embodiment may identify the state of the electronic device (e.g., any one of the unfolded state, the folded state, the in-folded state, and/or the out-folded state) that is verified by a sensor (e.g., the sensor 230 of FIG. 2) and divided by a posture of the first housing 111, the second housing 112, and the third housing 113. In one or more embodiments, the electronic device 101 including the flexible display 150 positioned on the second surface of the first housing 111 opposite to the first surface of the first housing 111 in which the cover display 152 is positioned, the third surface of the second housing 112, and the fourth surface of the third housing 113 may identify the folded state of the electronic device 101 based on identifying the third surface and the fourth surface facing each other and identifying the second surface and the third surface facing each other. In the above example, the electronic device 101 may identify the sub-folded state of the electronic device 101 based on identifying the third surface and the fourth surface facing each other and identifying that directions of the second surface and the third surface are the same. In the above example, the electronic device 101 may identify the unfolded state of the electronic device 101 based on identifying that directions of the second surface, the third surface, and the fourth surface are the same.

As described above, the electronic device 101 according to an embodiment may display a first screen by using the cover display 152 in the folded state of the electronic device 101 (e.g., the third state 303 of FIG. 3A) identified by the sensor. The electronic device 101 may display one or more screens including the first screen on a portion of the flexible display 150 (e.g., a portion of the flexible display 150 positioned on the second surface of the first housing 111) in the sub-fold state of the electronic device 101 (e.g., the state 302 of FIG. 3A) switched based on rotation of the first housing 111, from the folded state. A list of the one or more screens displayed on the portion may include a recent UI described with reference to FIG. 1. The electronic device 101 may receive a user input associated with the one or more screens displayed on the portion of the flexible display 150 in the sub-folded state. The electronic device 101 may display at least one screen corresponding to the user input on the entire active region of the flexible display 150 in the unfolded state of the electronic device 101 (e.g., the state 301 of FIG. 3A) switched based on rotation of the third housing 113, from the sub-folded state.

Hereinafter, with reference to FIG. 4, an operation of the electronic device 101 based on the shape of the electronic device 101 described with reference to FIGS. 3A and/or 3B is described.

FIG. 4 illustrates an exemplary flowchart of an electronic device according to an embodiment. An electronic device 101 of FIGS. 1 to 2 and/or an electronic device 310 of FIG. 3B may perform an operation of the electronic device described with reference to FIG. 4. For example, the electronic device 101 and/or a processor 210 of FIG. 2 may perform at least one of the operations of FIG. 4.

Referring to FIG. 4, in operation 410, the processor of the electronic device according to an embodiment may display a first screen on a first display based on a folded state. The first display of the operation 410 may include a cover display 152 of FIGS. 1, 3A, and/or 3B. The first screen displayed based on the operation 410 may be displayed based on execution of at least one software application executed by the processor. Based on the operation 410, the processor may display, on the first display, the first screen having a width, height, size, extent, and/or aspect ratio of an entire active region of the first display. For example, the first screen displayed based on the operation 410 may occupy the entire active region of the first display.

Referring to FIG. 4, in operation 415, the processor of the electronic device according to an embodiment may display a first list of screens including the first screen on a portion of a second display based on a state of the electronic device corresponding to a sub-folded state. The second display of the operation 415 may include a flexible display 150 of FIGS. 1, 3A and/or 3B. The processor according to an embodiment may identify the sub-folded state of the operation 415 based on a shape of the electronic device identified based on a sensor 230 of FIG. 2. In the sub-folded state of the operation 415, the electronic device may have a shape in which a portion of the second display (e.g., a portion of the flexible display 150 positioned on the first housing 111 of FIG. 3A) is exposed to an outside.

In the operation 415, the processor may display a UI based on the width, height, size, extent, and/or aspect ratio of the portion of the second display exposed to the outside. In the UI, the first list of one or more screens including the first screen that has been displayed based on the operation 410 may be displayed. In the first list, the processor may display a thumbnail (or image) corresponding to the first screen of the operation 410. The thumbnail corresponding to the first screen may have a size smaller than the first screen. The one or more screens included in the first list of the operation 415 may correspond to screens that have been displayed based on one or more software applications executed by the processor prior to the sub-folded state of the operation 415. Using the first list displayed based on the operation 415, the processor may determine one or more screens (or one or more software applications) selected by a user in the first list as one or more screens to be displayed in an unfolded state.

Referring to FIG. 4, in operation 420, the processor of the electronic device according to an embodiment may identify whether a first user input associated with the first list has been received. The first user input may include a touch input (or click) with respect to one or more screens displayed in the first list. In case that the first user input is received (420-yes), the processor may perform operation 430. In case that the first user input is not received (or before receiving) (420-no), the processor may perform operation 425.

Referring to FIG. 4, in the operation 425, the processor of the electronic device according to an embodiment may display a second screen associated with the first screen on the entire active region of the second display based on the state of the electronic device corresponding to the unfolded state. Before receiving the first user input of the operation 420, in case that the state of the electronic device is switched to the unfolded state, the processor may perform the operation 425. The second screen of the operation 425 may be displayed based on execution of a software application that provided the first screen of the operation 410. The width, height, size, extent, and/or aspect ratio of the second screen may correspond to the width, height, size, extent, and/or aspect ratio of the entire active region of the second display. For example, in the operation 425, the processor may display the first screen displayed before the unfolded state on the entire second display. A first software application corresponding to the first screen may be a software application lastly executed by the processor.

Referring to FIG. 4, in the operation 430, the processor of the electronic device according to an embodiment may identify whether a state of the electronic device has been switched to the unfolded state while the first user input is maintained. For example, while a touch input to any one screen of the first list is maintained, the processor may identify whether the state of the electronic device changes from the sub-folded state to the unfolded state. In case that the state of the electronic device is switched to the unfold state including a first state 301 of FIG. 3A (430-yes), the processor may perform operation 435. In case that the first user input is not maintained (430-no), the processor may perform operation 450.

Referring to FIG. 4, in the operation 435, the processor of the electronic device according to an embodiment may display, on the second display, a screen corresponding to the first user input and a second list of software applications installed in the electronic device. While the first user input of the operation 420 is maintained, the processor may perform the operation 435. In the operation 435, the processor may display a screen of the operation 435 corresponding to the first user input on a first portion (e.g., a portion where the first user input based on a touch gesture is received) among different portions of the second display (e.g., portions divided by one or more foldable hinge assemblies), and display the second list of the operation 435 on another portion of the second display different from the first portion. The second list may include a list of one or more software applications installed in the electronic device.

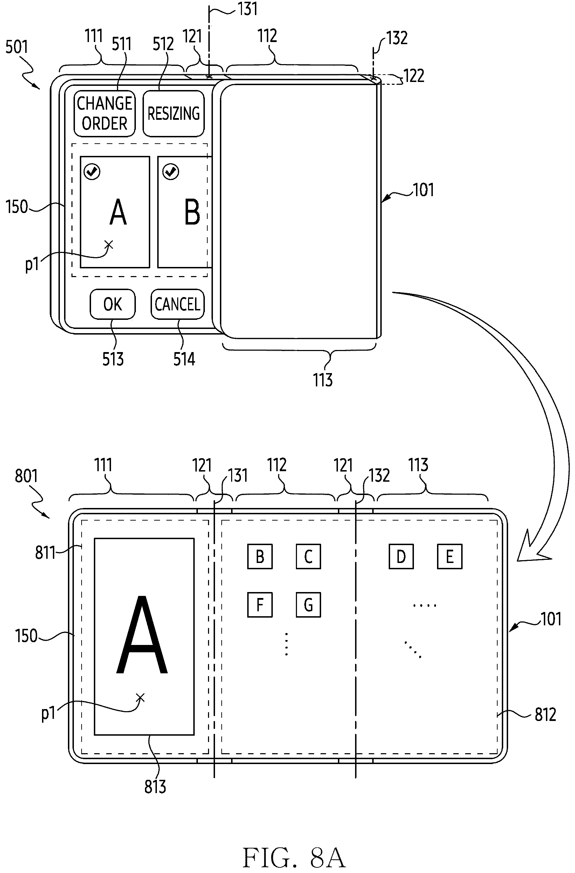

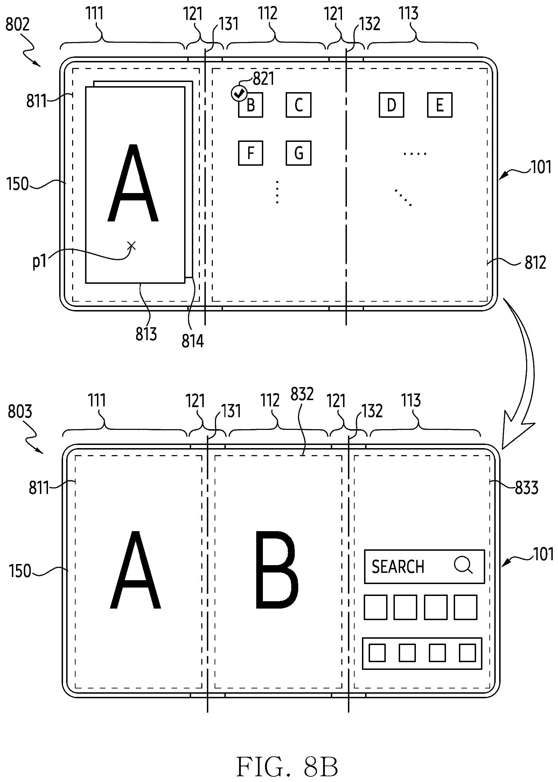

Referring to FIG. 4, in operation 440, the processor of the electronic device according to an embodiment may change at least one screen associated with the first user input based on a second user input received through the second list. In one or more embodiments, the processor may display a software application corresponding to the second user input and/or a screen provided from the software application below a screen displayed based on the operation 435. On a portion of the second display on which the screen of the operation 435 is displayed, the screen of the operation 435 and at least one screen of the operation 440 may be stacked. A plurality of screens stacked on the portion of the second display are exemplarily described with reference to FIGS. 8A and/or 8B.

Referring to FIG. 4, in operation 445, the processor of the electronic device according to an embodiment may identify whether the first user input has been released. Before the first user input is released (445-no), the processor may perform the operation 440. In case that the first user input is released (445-yes), the processor may perform the operation 450.

Referring to FIG. 4, in the operation 450, the processor of the electronic device according to an embodiment may identify whether the number of screens selected by the first user input is less than three. The processor may perform the operation 450 after the first user input is released (445-yes), and/or in case that the first user input is released before the state of the electronic device is switched to the unfold state (445-yes). In case that the number of screens in the operation 450 is less than three (450-yes), the processor may perform operation 455. In case that the number of screens in the operation 450 is three or more (450-yes), the processor may perform operation 460.

In one or more embodiments, the number of the operations 450 may correspond to the number of portions of the second display divided by a folding axis of the deformable electronic device. For example, the electronic device 101 of FIG. 1 including a first housing 111, a second housing 112, and a third housing 113 may set the number of the operations 450 to three. It may be understood by those skilled in the art of the operation 450 that the number of screens may be increased to three or more, based on diversification of a multi-foldable housing.

Referring to FIG. 4, in the operation 455, the processor of the electronic device according to an embodiment may display, on the second display, screens selected by the first user input and a home screen. The home screen of the operation 455 may be referred to as a launcher screen. The home screen of the operation 455 may include icons, a list, and/or at least one widget (or gadget) of software applications installed in the electronic device.

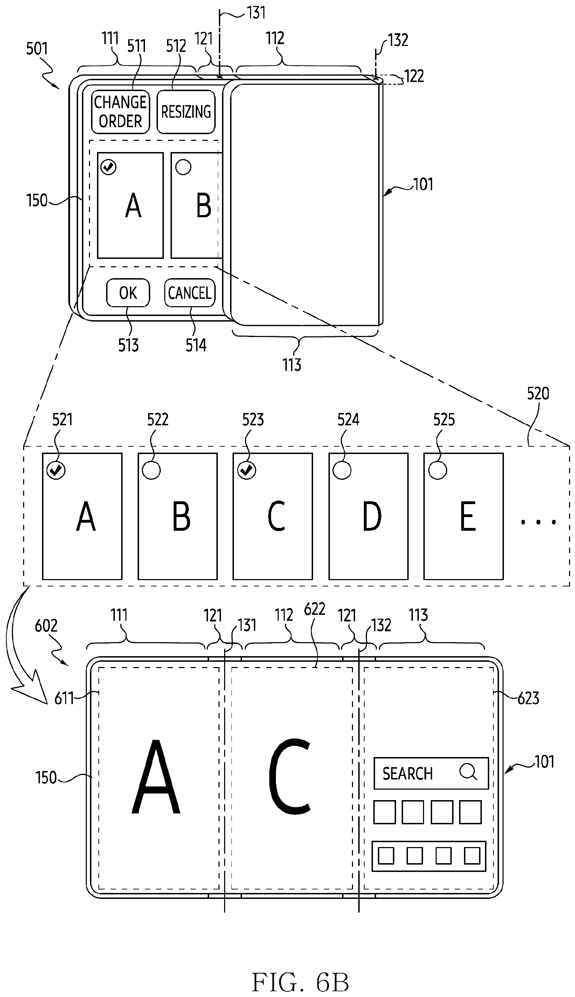

The processor of the electronic device including the first housing 111, the second housing 112, and the third housing 113 may display screens and the home screen of the operation 455 on portions of the second display positioned on each of the first housing 111, the second housing 112, and the third housing 113, respectively. For example, in case that two screens are selected by the first user input, the processor may display the first screen among the screens on a first portion of the second display positioned on the first housing 111, display the second screen among the screens on a second portion of the second display positioned on the second housing 112, and display the home screen on a third portion of the second display positioned on the third housing 113. For example, in case that one screen is selected by the first user input, the processor may display the screen selected by the first user input on the first portion, and display the home screen on the second portion and the third portion. An example of an electronic device on which a plurality of screens including the home screen are displayed based on the operation 455 is described with reference to FIGS. 6A and/or 6B.

Based on the operation 455, the home screen displayed on the portion of the second display may be used for selection of a software application to be executed based on the portion. For example, the processor may receive a third user input for executing a software application through the home screen. In response to the third user input, the processor may display a screen provided from a software application designated by the third user input on a portion of the second display on which the home screen is being displayed.

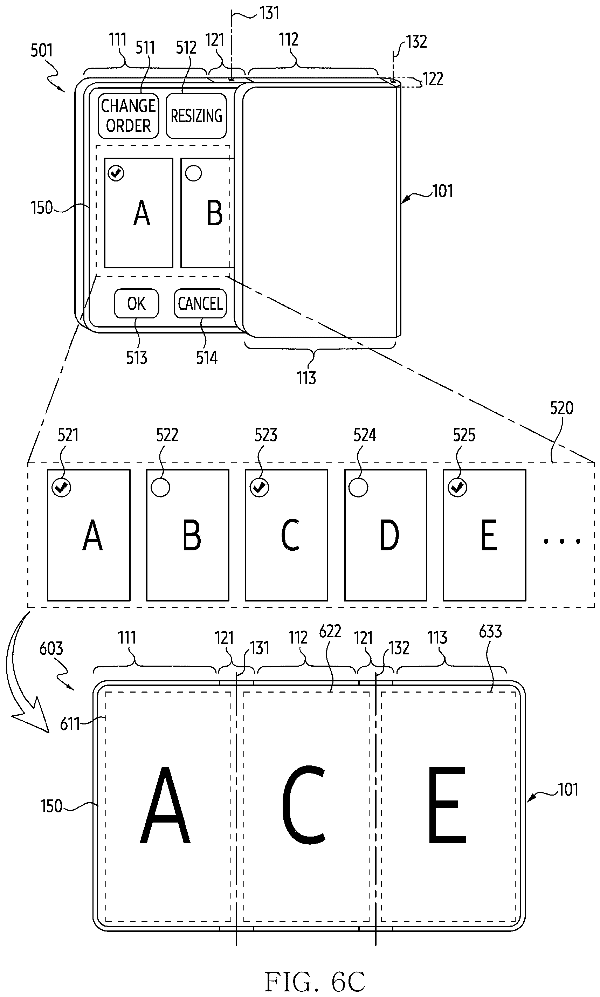

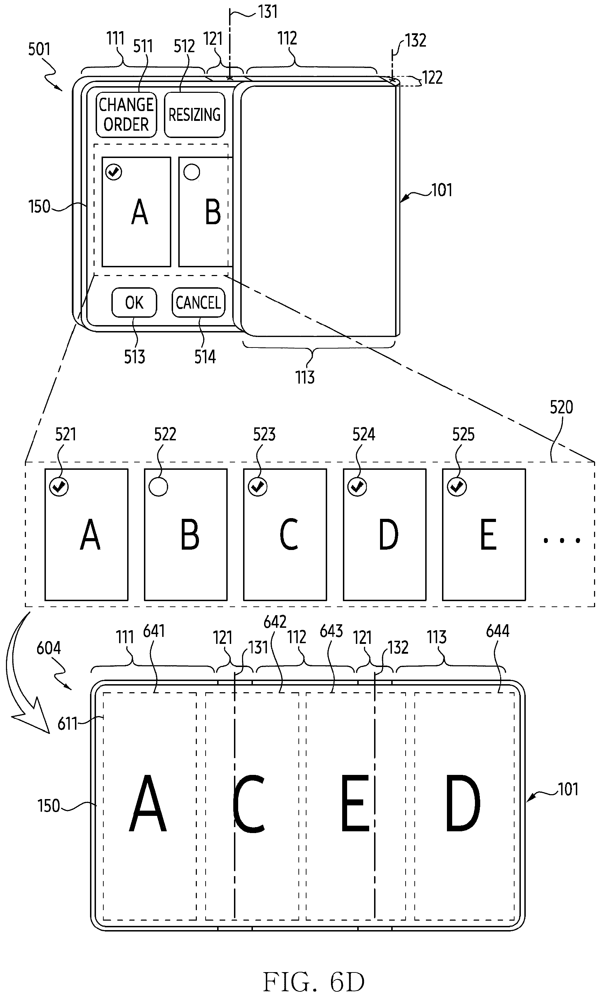

Referring to FIG. 4, in the operation 460, the processor of the electronic device according to an embodiment may display screens based on multi-windows on the second display. In case that three or more screens are selected by the first user input, the processor may display the screens selected by the first user input, respectively, on portions that equally divide the entire active region of the second display. The processor performing the operation 460 may display screens of the operation 460 based on the PBP. For example, the screens may occupy different portions of the second display. An operation of the processor displaying a plurality of screens based on the operation 460 is described with reference to FIGS. 6C and/or 6D.

As described above, the processor of the electronic device according to an embodiment may display one or more screens displayed through the first display and/or the second display, or a combination thereof, in case of switching to the unfolded state by rotation of the housing. As described above with reference to FIG. 1, 3A, and/or 3B, the electronic device including a plurality of folding axes (e.g., the first folding axis 131 and/or the second folding axis 132 of FIG. 1) may be switched from the folded state (e.g., the third state 303 of FIG. 3A and/or the state 191 of FIG. 1) to the sub-folded state (e.g., the second state 302 of FIG. 3A and/or the state 192 of FIG. 1) and then be switched from the sub-folded state to the unfolded state (e.g., the first state 301 of FIG. 3A and/or the state 193 of FIG. 1).

The processor of the electronic device according to an embodiment may, in the sub-folded state, display a UI for organizing a screen to be displayed on a display (e.g., the second display of FIG. 4 and/or the flexible display 150 of FIGS. 1, 2, 3A, and/or 3B) to be activated in the unfolded state. The UI may include one or more screens provided from one or more software applications that have been executed by the processor, such as the first list of FIG. 4. Using the UI, the processor may provide a user experience based on multitasking by using the display having a relatively large size.

Hereinafter, an exemplary operation of a processor displaying the first list based on the operation 415 is described with reference to FIGS. 5A to 5C.

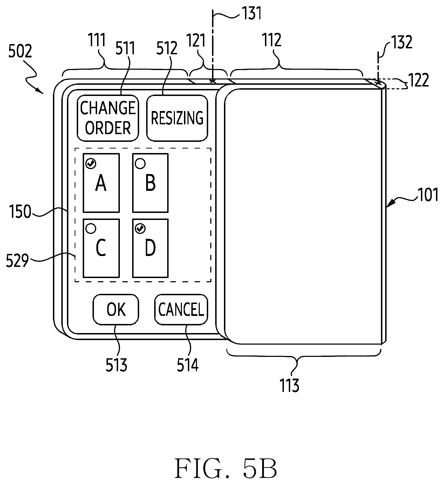

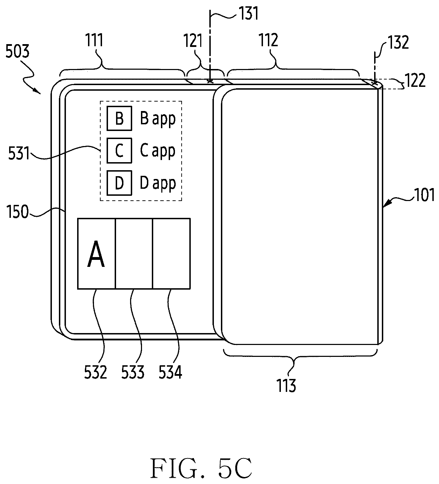

FIGS. 5A, 5B, and 5C illustrate exemplary user interfaces (UIs) displayed by an electronic device 101 in a sub-folded state. The electronic device 101 of FIGS. 1, 2, and/or 3A may perform an operation of the electronic device 101 described with reference to FIGS. 5A, 5B, and/or 5C. The electronic device 101 of FIG. 2 and/or a processor 210 of FIG. 2 may perform the operation of the electronic device 101 described with reference to FIGS. 5A, 5B, and/or 5C. At least one of the operations of FIG. 4 may be associated with the operation of the electronic device 101 of FIGS. 5A, 5B, and/or 5C. Although the operation of FIGS. 5A, 5B, and/or 5C is described based on the electronic device 101 of FIG. 3A, the embodiment is not limited thereto, and an electronic device 310 of FIG. 3B may also perform the operation of FIGS. 5A, 5B, and/or 5C.

Referring to FIGS. 5A to 5C, exemplary states 501, 502, and 503 of the electronic device 101 included in the sub-folded state are illustrated. In the states 501, 502, and 503, a portion of a flexible display 150 positioned on a first housing 111 may be exposed to an outside by rotation of the first housing 111 with respect to a second housing 112. In the states 501, 502, and 503, since rear surfaces of the second housing 112 and a third housing 113 (e.g., the surfaces on which the flexible display 150 is positioned) face each other, another portion of the flexible display 150 distinct from the portion of the flexible display 150 positioned on the first housing 111 may be occluded by the second housing 112 and/or the third housing 113. A state in which only a portion of the flexible display 150 positioned on the first housing 111 is exposed to the outside, such as the states 501, 502, and 503, may be referred to as a half-folded state (or half-folding state). The half-folded state may be included in the sub-folded state described with reference to FIGS. 3A and/or 3B.

The electronic device 101 according to an embodiment may identify the half-folded state of the electronic device 101 by using a sensor (e.g., the sensor 230 of FIG. 2). In the half-folded state, the electronic device 101 may display at least one screen that has been executed by the processor (e.g., the processor 210 of FIG. 2) of the electronic device 101 on a portion of the flexible display 150. The portion of the flexible display 150 may correspond to a portion of the flexible display 150 exposed to the outside, for example, a portion of the flexible display 150 positioned on the first housing 111. Using the at least one screen, the electronic device 101 may receive a user input for selecting at least one software application to be executed based on the flexible display 150 in another state (e.g., the unfolded state) after the half-folded state (e.g., the states 501, 502, and 503 of FIGS. 5A to 5C).

Referring to FIGS. 5A to 5C, different layouts of a UI displayed on a portion of the flexible display 150 in the half-folded state are illustrated. Referring to the state 501 of FIG. 5A, the electronic device 101 may display a plurality of screens corresponding to each of a plurality of software applications that have been executed by the processor on a portion of the flexible display 150. The plurality of screens may be symbols for representing the plurality of software applications. Each of the plurality of screens displayed on a portion of the flexible display 150 may be a thumbnail and/or screen shot of a screen that has been displayed based on execution of a corresponding software application. Along with the plurality of screens, the electronic device 101 may display names (e.g., package names) of software applications corresponding to each of the plurality of screens.

In the exemplary state 501 of FIG. 5A, the electronic device 101 may display a list 520 of a plurality of scrollable screens. Referring to FIG. 5A, the exemplary state 501 of displaying the plurality of screens scrollable along a horizontal direction (e.g., a direction perpendicular to the first folding axis 131 and/or the second folding axis 132) of the flexible display 150 is illustrated. In the state 501, the electronic device 101 may display at least one of a plurality of screens (e.g., screen A, screen B, screen C, screen D, and/or screen E) included in the list 520 on a portion of the flexible display 150. Each of the plurality of screens may have a size smaller than a portion of the flexible display 150. In response to a swipe gesture performed on the plurality of screens along the horizontal direction of the flexible display 150, the electronic device 101 may change at least one screen displayed on a portion of the flexible display 150 based on order of the plurality of screens arranged in the list 520.

In the state 501 of FIG. 5A, the electronic device 101 may receive the user input for selecting at least one screen from among a plurality of screens included in the list 520. In order to receive the user input, the electronic device 101 may display visual objects 521, 522, 523, 524, and 525 having a mode toggled by the user input on each of the plurality of screens. Referring to FIG. 5A, the exemplary visual objects 521, 522, 523, 524, and 525 having a check box shape are illustrated, but the embodiment is not limited thereto. Each of the visual objects 521, 522, 523, 524, and 525 may overlap each of the plurality of screens included in the list 520.

Each mode of the visual objects 521, 522, 523, 524, and 525 may include a first mode indicating selection of a screen and/or software application corresponding to the visual object or a second mode different from the first mode. A visual object in the first mode, such as the visual objects 521, 523, and 524, may include an image (e.g., an image and/or icon in a shape of "V") and/or text to indicate that it has been selected by a user. A visual object of the second mode may have a shape of an empty figure (e.g., a circle) to indicate that it has not been selected by the user. Based on a user input for each of the visual objects 521, 522, 523, 524, and 525, the modes of each of the visual objects 521, 522, 523, 524, and 525 may be toggled between the first mode or the second mode. Thus, the processor 210 may be configured to display visual objects superimposed on each of the plurality of screens configured to be toggled by the user input.

In an embodiment, the electronic device 101 may receive a user input for adjusting a location relationship between a plurality of screens selected in the list 520. Referring to the exemplary state 501 of FIG. 5A, the electronic device 101 may display a visual object 511 for changing order of the plurality of screens in the flexible display 150. Although the button-shaped visual object 511 including designated text such as "change order" is illustrated, the embodiment is not limited thereto.

Based on an input indicating selection of the visual object 511, the electronic device 101 may be switched to a state (e.g., a state 701 of FIG. 7A) capable of receiving another input for adjusting the order of the plurality of screens selected in the list 520. The embodiment is not limited thereto, and the electronic device 101 may be switched to the state capable of receiving the other input for adjusting the order of the plurality of screens based on a long-touch (or long-press) gesture for any one screen in the list 520. The location relationship may include order of screens to be displayed in an entire active region of the flexible display 150 in the unfolded state after the half-folded state.

In an embodiment, the electronic device 101 may receive a user input for adjusting a ratio of extent and/or sizes in which the plurality of screens selected in the list 520 occupy the entire active region of the flexible display 150. Referring to the exemplary state 501 of FIG. 5A, the electronic device 101 may display a visual object 512 for adjusting the ratio. Although the button-shaped visual object 512 including designated text such as "resizing" (or "respacing") is illustrated, the embodiment is not limited thereto.

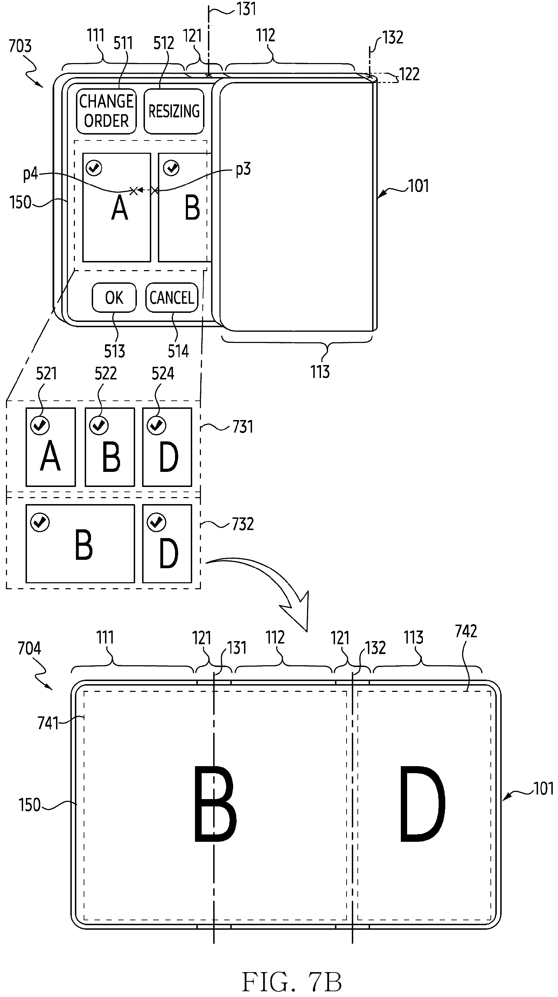

In response to an input indicating selection of the visual object 512, the electronic device 101 may be switched to a state (e.g., a state 701 of FIG. 7B) capable of receiving another input for adjusting the ratio of sizes and/or extent of the plurality of screens selected in the list 520. The embodiment is not limited thereto, and the electronic device 101 may be switched to the state capable of receiving the other input for adjusting the ratio based on a long-touch (or long-press) gesture with respect to an area (e.g., a border line and/or padding between the plurality of screens) between the plurality of screens in the list 520. The ratio of the sizes of screens to be displayed on the flexible display 150 in the unfolded state after the half-folded state may correspond to the ratio adjusted in the state. The processor 210 may be configured to adjust ratio of sizes of the plurality of screens occupying an entire active region of the second display including the first displaying area, the second displaying area and the third displaying area, at least based on a second user input for selecting a border line between the plurality of screens.

In an embodiment, the electronic device 101 may display a visual object 513 for verifying a user input received in the half-folded state and/or a visual object 514 for canceling the user input. The button-shaped visual object 513 including designated text such as "OK" and/or the button-shaped visual object 514 including designated text such as "cancel" are illustrated, but the embodiment is not limited thereto. In response to an input indicating selection of the visual object 513, the electronic device 101 may determine at least one screen selected based on the list 520 at a timing of receiving the input as at least one screen to be displayed in the unfolded state. The electronic device 101, which has received an input associated with the visual object 514, may reset the mode of the visual objects 521, 522, 523, 524, and 525 adjusted by another input received through the list 520 before the timing of receiving the input. For example, the electronic device 101 may change the mode of all visual objects indicating whether each of the plurality of screens in the list is selected by the user, such as the visual objects 521, 522, 523, 524, and 525, to the second mode.

A layout of a UI displayed by the electronic device 101 in the sub-folded state including the half-folded state is not limited to the state 501 of FIG. 5A. Referring to the exemplary state 502 of FIG. 5B, the electronic device 101 may display a list 529 of a plurality of software applications that has been executed by the processor on a portion of the flexible display 150 exposed to the outside. The electronic device 101 may display the list 529 including icons and/or images (e.g., the plurality of screens of FIG. 5A) representing each of the plurality of software applications.

Referring to FIG. 5B, the electronic device 101 may display the list 529 that may be scrolled along a vertical direction. In the list 529, the electronic device 101 may display images (e.g., screen shot) corresponding to each of the plurality of software applications. The images may be two-dimensionally arranged along a row direction and a column direction in the list 529. Based on a swipe gesture performed along the vertical direction on the list 529, the electronic device 101 may replace or change images displayed on the flexible display 150 based on the order of the images in the list 529.

In the state 502 of FIG. 5B, the electronic device 101 may display visual objects (e.g., check boxes) for receiving an input for selecting at least one screen to be displayed in the unfolded state, along with images included in the list 529. The visual objects may be displayed superimposed on each of the images included in the list 529 in order to visualize a relationship between the visual object and the image.

Referring to the exemplary state 503 of FIG. 5C, the electronic device 101 may display a list 531 based on icons of each of the plurality of software applications that have been executed by the processor on a portion of the flexible display 150 positioned on the first housing 111. In the list 531, the electronic device 101 may display names (e.g., package names) of each of the plurality of software applications, together with the icons. The electronic device 101 displaying the list 531 in which icons are arranged along the vertical direction of the flexible display 150 may scroll the list 531 based on a swipe gesture performed along the vertical direction on a portion of the flexible display 150 on which a portion of the list 531 is displayed.

Referring to the state 503 of FIG. 5C, the electronic device 101 may display visual objects 532, 533, and 534 for adjusting a layout of screens to be displayed in the unfolded state after the half-folded state, together with the list 531. The visual objects 532, 533, and 534 may each correspond to different portions of the flexible display 150 (e.g., portions corresponding to each of the first housing 111, the second housing 112, and the third housing 113) in the unfolded state. The electronic device 101 may receive an input (e.g., an input based on a drag gesture) for moving an icon to one of the visual objects 532, 533, and 534 from the list 531.

Referring to FIG. 5C, the exemplary state 503 of the electronic device 101 that has received an input for moving an icon corresponding to a software application A to the visual object 532 is illustrated. The electronic device 101 that has received the input may display an icon and/or an image (e.g., screen shot) corresponding to the software application A in the visual object 532. The input for moving the icon to the visual object 532 may be an input for displaying a screen corresponding to the software application A corresponding to the icon on a portion of the flexible display 150 (e.g., the portion of the flexible display 150 positioned on the first housing 111) corresponding to the visual object 532 in the unfolded state.

Similarly, the electronic device 101 may receive an input for matching each of the visual objects 533 and 534 with any one of the icons in the list 531. After receiving the input, in a state of the electronic device 101 switched to the unfolded state, the electronic device 101 may display at least one screen on different portions of the flexible display 150 by executing at least one software application matched to each of the visual objects 532, 533, and 534 by the input.

As described above, the electronic device 101 according to an embodiment may display a list (e.g., lists 520, 529, and 531) of a plurality of software applications that have been executed by the electronic device 101 in the half-folded state and/or the sub-folded state, such as the states 501, 502, and 503 of FIGS. 5A to 5C. While displaying a plurality of screens (or items in the list) based on the list, the electronic device 101 may receive the user input for selecting the at least one of the plurality of screens (or the items). In the unfolded state after the half-folded state and/or the sub-folded state, the electronic device 101 may display at least one screen associated with the user input on the entire active region of the flexible display 150.

Hereinafter, an operation of the electronic device 101 that has received a user input in the states 501, 502, and 503 of FIGS. 5A to 5C is described with reference to FIGS. 6A to 6D.

FIGS. 6A, 6B, 6C, and 6D illustrate exemplary UIs of an electronic device 101 displayed based on an input received in a sub-folded state. The electronic device 101 of FIGS. 1, 2 and/or 3A may perform the operation of the electronic device 101 described with reference to FIGS. 6A to 6D. The electronic device 101 and/or a processor 210 of FIG. 2 may perform the operation of the electronic device 101 described with reference to FIGS. 6A to 6D. The operation of the electronic device 101 described with reference to FIGS. 6A to 6D may be associated with at least one of the operations of FIG. 4. Although different states 601, 602, 603, and 604 of the electronic device 101 of FIG. 3A are illustrated in FIGS. 6A to 6D, the embodiment is not limited thereto, and an electronic device 310 of FIG. 3B may also perform the operation of FIGS. 6A to 6D.

The electronic device 101 according to an embodiment may display a list 520 of a plurality of software applications that have been executed based on a display (e.g., the cover display 152 and/or the flexible display 150 of FIGS. 1 to 2) in a state 501 included in the sub-folded state and/or a half-folded state. In the list 520, the electronic device 101 may display a plurality of screens (e.g., screen shots) that have been displayed by each of the plurality of software applications.

As described above with reference to FIG. 5A, the electronic device 101 may display visual objects 521, 522, 523, 524, and 525 overlapped on each of the plurality of screens. Based on a user input received in the state 501, the electronic device 101 may determine at least one software application to be executed based on the flexible display 150 in an unfolded state (e.g., the states 601, 602, 603, and 604 of FIGS. 6A to 6D) after the state 501. The user input may include an input of selecting and/or touching at least one of the plurality of screens displayed based on the list 520.

The electronic device 101 according to an embodiment may display the plurality of screens separated by at least one of designated border lines on the flexible display 150 in the unfolded state after receiving a user input for selecting a plurality of screens. The designated border lines may include a border line between one surfaces of a first housing 111 to a third housing 113 on which the flexible display 150 is positioned. For example, the designated border lines may include a first border line between a first surface on the first housing 111 and a second surface on a second housing 112, on which the flexible display 150 is positioned. The designated border lines may include a second border line between the second surface and a third surface on the third housing 113. The flexible display 150 may be positioned from the first surface to the third surface across the second surface.

Referring to FIG. 6A, the exemplary state 601 of the electronic device 101 corresponding to the unfolded state after receiving an input for selecting one software application (e.g., a software application corresponding to screen A) based on the list 520 in the state 501 is illustrated. In the state 601, the electronic device 101 may display the screen A corresponding to a software application that has been selected based on the list 520 on a portion 611 of the flexible display 150. Referring to FIG. 6A, the exemplary state 601 of displaying the screen A on the portion 611 of the flexible display 150 positioned on the first housing 111 is illustrated, but the embodiment is not limited thereto.

In the state 601 after less than three screens have been selected, the electronic device 101 may display a home screen on another portion 612 of the flexible display 150 different from the portion 611, based on operation 455 of FIG. 4. Referring to FIG. 6A, a border line between the portion 611 on which the screen A is displayed and the portion 612 on which the home screen is displayed may be formed on a first hinge assembly 121 connecting the first housing 111 and the second housing 112. The border line may correspond to a first folding axis 131.

In the state 601 of displaying the home screen on the portion 612 of the flexible display 150, the electronic device 101 may receive a user input for executing a software application through the home screen. The electronic device 101 may display icons representing each of the software applications installed in the electronic device 101 in the home screen. The icons may be grouped based on one or more categories in the portion 612. The one or more categories may include a history (e.g., a recently executed application) executed by the electronic device 101 and/or designated categories for classifying the software applications. In response to the user input, the electronic device 101 may display a screen (e.g., an execution screen) provided from a software application corresponding to the user input on the portion 612. For example, the electronic device 101 may display an execution screen associated with the user input on the portion 612 together with the screen A displayed on the portion 611.

Referring to FIG. 6A, in case that one software application and/or screen is selected in the half-folded state and/or the sub-folded state, the electronic device 101 may display the home screen together with the selected screen in the unfolded state. The embodiment is not limited thereto, and the electronic device 101 may display the selected screen on an entire active region of the flexible display 150. Although the exemplary state 601 of displaying the screen A and the home screen having sizes of 1:2 ratio is illustrated based on the first border line formed on the first hinge assembly 121, the embodiment is not limited thereto, and the electronic device 101 may display the screen A and the home screen having the same size on different portions of the flexible display 150.

Referring to FIG. 6B, the exemplary state 602 of the electronic device 101 corresponding to the unfolded state after receiving an input for selecting two software applications (e.g., software applications corresponding to each of screen A and screen C) based on the list 520 in the state 501 is illustrated. In the state 602, the electronic device 101 may display screens of the two software applications on different portions of the flexible display 150, respectively. For example, the electronic device 101 may display the screen A on the portion 611 of the flexible display 150 positioned on the first housing 111. While the screen A is displayed on the portion 611 corresponding to the first housing 111, the electronic device 101 may display the screen C on a portion 622 next to the portion 611. The portion 622 of the flexible display 150 on which the screen C is displayed may be a portion positioned on the second housing 112. The screen A and the screen C may be provided from a plurality of software applications selected based on the list 520. By displaying the screen A and the screen C substantially simultaneously, the electronic device 101 may provide a user experience based on multi-windows in response to a user input received in the half-folded state.

Similar to the state 601 of FIG. 6A, in case that less than three screens and/or software applications are selected, the electronic device 101 may display the home screen on a remaining portion 623 distinct from the portions 611 and 622 where each of the screen A and the screen C are displayed. The portion 623 where the home screen is displayed may be a portion of the flexible display 150 positioned on the third housing 113. Referring to FIG. 6B, border lines between the portions 611, 622, and 623 may be formed on the first hinge assembly 121 and a second hinge assembly 122, respectively.

Based on the home screen displayed on the portion 623, the electronic device 101 may receive a user input for selecting an execution screen to be displayed together with the screen A and the screen C. For example, in response to a user input for selecting an icon displayed through the home screen, the electronic device 101 may display an execution screen provided from a software application corresponding to the icon on the portion 623. In the above example, the electronic device 101 may display the execution screen on the portion 623 together with the screen A and the screen C displayed on each of the portions 611 and 622.

Referring to FIG. 6C, the exemplary state 603 of the electronic device 101 corresponding to the unfolded state after receiving an input for selecting three software applications (e.g., software applications corresponding to each of screen A, screen C, and screen E) based on the list 520 in the state 501 is illustrated. In the state 603, the electronic device 101 may display screens of the three software applications on each of the different portions 611, 622, and 633 of the flexible display 150.

In the exemplary state 603 of FIG. 6C, the electronic device 101 may display the screen A on the portion 611 of the flexible display 150 positioned on the first housing 111, the screen C on the portion 622 of the flexible display 150 positioned on the second housing 112, and the screen E on the portion 633 of the flexible display 150 positioned on the third housing 113. By displaying the screen A, the screen C, and the screen E substantially simultaneously, the electronic device 101 may provide a user experience based on multi-windows and/or multitasking.

Referring to FIG. 6C, in the state 603 included in the unfolded state, the electronic device 101 may display three screens on each of the portions 611, 622, and 633 that equally divide the flexible display 150. A border line between the portions 611 and 622 may be formed on the first hinge assembly 121. A border line between the portions 622 and 633 may be formed on the second hinge assembly 122.

Referring to FIG. 6D, the exemplary state 604 of the electronic device 101 corresponding to the unfolded state after receiving an input for selecting software applications exceeding three based on the list 520 in the state 501 is illustrated. In one or more embodiments, the electronic device 101 that has received user inputs for selecting each of the screen A, the screen C, a screen D, and the screen E may display visual objects 521, 523, 524, and 525 overlapping each of the screen A, the screen C, the screen D, and the screen E in the list 520 based on a mode (e.g., the first mode) and/or shape different from the visual object 522. After the screen A, the screen C, the screen D, and the screen E in the list 520 are selected, the electronic device 101, which has identified switching from the half-folded state to the unfolded state, may execute software applications corresponding to the screen A, the screen C, the screen D, and the screen E selected in the list 520. The electronic device 101 may display the screen A, the screen C, the screen D, and the screen E provided from the executed software applications on the entire active region of the flexible display 150.

Referring to FIG. 6D, the exemplary state 604 of displaying the screen A, the screen C, the screen D, and the screen E on different portions 641, 642, 643, and 644 of the flexible display 150 is illustrated. In the state 604, the electronic device 101 may provide a user experience based on multi-windows and/or PBP by using the portions 641, 642, 643, and 644 that equally divide the entire active region of the flexible display 150. For example, the portions 641, 642, 643, and 644 may have widths and/or heights that coincide with each other.

An embodiment is illustrated in which the height of the portions 641, 642, 643, and 644 matches the height of the flexible display 150, and a sum of the widths of the portions 641, 642, 643, and 644 match the width of the flexible display 150, but the embodiment is not limited thereto. For example, in the state 604, the electronic device 101 may change the width, height, and/or size of at least one of the portions 641, 642, 643, and 644 based on a user input (e.g., a user input including a drag gesture) with respect to a border line (or frames) between the portions 641, 642, 643, and 644.

As described above, the electronic device 101 according to an embodiment may determine a screen to be displayed in the unfolded state by using a UI displayed in the sub-folded state and/or the half-folded state. In case of determining to display a plurality of screens in the unfolded state, the electronic device 101 may display the plurality of screens on different portions of the flexible display 150, respectively. Each size of portions on which the plurality of screens are displayed may match each other or may be different from each other.

Hereinafter, referring to FIGS. 7A to 7B, an exemplary operation of the electronic device 101 in the sub-folded state and/or the half-folded state that adjusts order and/or size of screens to be displayed in the unfold state is described.

FIGS. 7A and 7B illustrate exemplary UIs of an electronic device 101 displayed based on an input received in a sub-folded state. The electronic device 101 of FIGS. 1, 2 and/or 3A may perform the operation of the electronic device 101 described with reference to FIGS. 7A and/or 7B. The electronic device 101 and/or a processor 210 of FIG. 2 may perform the operation of the electronic device 101 described with reference to FIGS. 7A and/or 7B. The operation of the electronic device 101 described with reference to FIGS. 7A and/or 7B may be associated with at least one of the operations of FIG. 4. Although different states 701, 702, 703, and 704 of the electronic device 101 of FIG. 3A are illustrated in FIGS. 7A and/or 7B, the embodiment is not limited thereto, and an electronic device 310 of FIG. 3B may also perform the operation of FIGS. 7A to 7B.

Referring to FIGS. 7A and/or 7B, the different states 701, 702, 703, and 704 of the electronic device 101 included in a half-folded state and/or a sub-folded state are illustrated. In the state 701, the electronic device 101 may display a list 520 of a plurality of software applications that were executed by the electronic device 101 before the state 701. In the list 520, the electronic device 101 may display a plurality of screens corresponding to each of the plurality of software applications.

Referring to FIG. 7A, in the state 701 in which a screen A and a screen B are selected by a user, the electronic device 101 may receive a user input for adjusting order of the screen A and the screen B. The user input may include a gesture (e.g., a tap gesture) indicating selection of a visual object 511. The user input may include a gesture performed on the screen A and/or the screen B. For example, the user input may include a long touch gesture performed on the screen A or the screen B. For example, the user input may include a drag gesture initiated on a point p1 on the screen B and stopped at a point p2 on the screen A. The electronic device 101 that has received the user input for adjusting the order of the screen A and the screen B may switch from the state 701 to the state 702 of FIG. 7A.

Referring to FIG. 7A, in the state 702 after receiving the drag gesture initiated on the point p1 on the screen B and stopped at the point p2 on the screen A, the electronic device 101 may change the order of the screen A and the screen B displayed on a flexible display 150 based on the drag gesture. For example, the electronic device 101 may display the screen A on the right side of the screen B in the state 702 that is switched based on the drag gesture from the state 701 in which the screen B was displayed on the right side of the screen A. After the state 702, in case that a state of the electronic device 101 is switched to the unfolded state, the electronic device 101 may display the screen A on the right side of the screen B on the entire active region of the flexible display 150.

Referring to FIG. 7B, in the state 703 in which the screen A, the screen B, and the screen D are selected by the user, the electronic device 101 may receive a user input for adjusting sizes of screens (e.g., the screen A, the screen B, and the screen D) to be displayed in the unfolded state. The user input may include a gesture (e.g., a tap gesture) indicating selection of a visual object 512. The user input may include a gesture performed on a border line of screens displayed on the flexible display 150. For example, the user input may include a long touch gesture performed at a point p3 on a padding between the screen A and the screen B. The user input may include a drag gesture initiated on the point p3 and stopped at a point p4 on the screen A.

The electronic device 101 that has received the user input may stop displaying screens other than the screens selected by the user (e.g., the screen A, screen B, and screen D) in the list of a plurality of screens. For example, the electronic device 101 may be switched to a designated mode and/or a designated state for adjusting a location relationship (e.g., order and/or size) between the screens in response to the user input illustrated above. For example, the electronic device 101 may display a list 731 including screens selected by the user on a portion of the flexible display 150 (e.g., the portion of the flexible display 150 positioned on the first housing 111). The list 731 displayed on the portion of the flexible display 150 may include the screen A, the screen B, and the screen D that may be scrolled along a designated direction (e.g., the horizontal direction of the flexible display 150).

Referring to FIG. 7B, the electronic device 101 that has received the drag gesture initiated at the point p3 between the screen A and the screen B and stopped at the point p4 on the screen A may increase a size of the screen B based on the drag gesture, as in the list 732. The electronic device 101, which has increased the size of the screen B may exclude or remove the screen A reduced by the drag gesture from the list 732. Based on the drag gesture, the electronic device 101 may adjust a ratio of sizes of the screens occupying at least a portion of the entire active region.

The electronic device 101, which displays the list 732 including the screen B and the screen D having an increased size, may display the screen B and the screen D on the entire active region of the flexible display 150 based on the ratio of the sizes of the screen B and the screen D in the list 732, as in the state 704 of FIG. 7B, in case of switching to the unfolded state. For example, a ratio between a size of a portion 741 of the flexible display 150 occupied by the screen B and a size of a portion 742 of the flexible display 150 occupied by the screen D in the state 704 may match the ratio of the sizes of the screen B and the screen D displayed in the list 732.

As described above, the electronic device 101 according to an embodiment may identify a user input associated with a border line between a plurality of screens in the half-folded state and/or the sub-folded state in which the plurality of screens are selected. For example, at least based on a user input for selecting the user input, the electronic device 101 may adjust the ratio of the sizes of the plurality of screens occupying the entire active region of the flexible display 150. By adjusting the ratio of the sizes, the electronic device 101 may organize the plurality of screens to be displayed in the unfolded state.

The electronic device 101 according to an embodiment may perform an operation for displaying a specified screen in the unfolded state based on a user input maintained on the specified screen, while switching from the half-folded state and/or the sub-folded state to the unfolded state. Hereinafter, an exemplary operation of the electronic device 101 that has received the user input is described with reference to FIGS. 8A and/or 8B.

FIGS. 8A and 8B illustrate an exemplary UI of an electronic device 101 displayed based on an input received in a sub-folded state. The electronic device 101 of FIGS. 1, 2 and/or 3A may perform the operation of the electronic device 101 described with reference to FIGS. 8A and/or 8B. The electronic device 101 and/or a processor 210 of FIG. 2 may perform the operation of the electronic device 101 described with reference to FIGS. 8A and/or 8B. The operation of the electronic device 101 described with reference to FIGS. 8A and/or 8B may be associated with at least one of the operations of FIG. 4. Although different states 801, 802, and 803 of the electronic device 101 of FIG. 3A are illustrated, the embodiment is not limited thereto, and an electronic device 310 of FIG. 3B may also perform the operation of FIGS. 8A and/or 8B.

Referring to FIG. 8A, a state 501 of the electronic device 101 corresponding to a half-folded state and/or the sub-folded state is illustrated. In the state 501, the electronic device 101 may display a list of a plurality of software applications and/or a plurality of screens that have been executed by the electronic device 101 on an externally exposed portion of a flexible display 150 (e.g., the portion positioned on the first housing 111). In the state 501 of displaying the list, the electronic device 101 may identify a gesture of touching a point (e.g., the point p1) on a specified screen (e.g., the screen A) included in the list. While the gesture is maintained, the electronic device 101 may be switched from the half-folded state to an unfolded state. For example, a user of the electronic device 101 may switch to the unfolded state by rotating a third housing 113 based on a second folding axis 132 while touching the point p1 on the screen A. The electronic device 101, which has identified the unfolded state based on the rotation of the third housing 113, may enter the state 801 from the state 501 of FIG. 8A.

Referring to the exemplary state 801 of FIG. 8A, while switching from the sub-folded state to the unfolded state, the electronic device 101, which has identified a first user input (or touch input) maintained on the point p1 in the screen A, may be switched to a designated state and/or a designated mode for organizing one or more screens including the screen A. For example, the electronic device 101 may display the screen A 813 on a portion 811 of the flexible display 150 positioned on the first housing 111. While the touch input on the point p1 in the screen A 813 is maintained, the electronic device 101 may display a screen including a list (e.g., an application list) of software applications installed in the electronic device 101 on another portion 812 different from the portion 811.

Referring to the exemplary state 801 of FIG. 8A, the electronic device 101 may display the screen A 813 associated with the first user input on the portion 811 including the point p1 at which the first user input is maintained in an entire active region of the flexible display 150. While the first user input is maintained, the electronic device 101 may display the screen A 813 having a size smaller than the portion 811 on the portion 811.

In the exemplary state 801 of FIG. 8A, in response to the release of the first user input for selecting the screen A 813 based on the point p1, the electronic device 101 may display the screen A on the portion 811 of the flexible display 150. After the first user input is released, the electronic device 101 may display the screen A having a size of the portion 811. While the first user input for selecting the screen A 813 is maintained, the electronic device 101 may further receive a second user input for selecting another screen to be displayed together with the screen A 813. In the state 801 of FIG. 8A, the electronic device 101 may receive the second user input for selecting the other screen in the list displayed in the portion 812. For example, while displaying a list including icons representing each of a plurality of software applications installed in the electronic device 101 in the portion 812, the electronic device 101 may receive the second user input for selecting any one of the icons.

In the exemplary state 801 of FIG. 8A, the electronic device 101, which has received the second user input for selecting an icon corresponding to a software application B displayed in the portion 812 together with the first user input maintained on the point p1, may switch to the state 802 of FIG. 8B. In the state 802, the electronic device 101 may display a screen 814 corresponding to the software application B together with the screen A 813 based on the second user input. The screen B 814 may be a screen shot that has been displayed by the software application B. In the exemplary state 802 of FIG. 8B, the electronic device 101 may display the screen B 814 overlapping the screen A 813. The screen B 814 displayed in the portion 811 of the flexible display 150 may be displayed below the screen A 813.

Referring to FIG. 8B, the electronic device 101 may display a visual object 821 on an icon corresponding to the software application B based on the second user input. Although the visual object 821 having a check box shape is illustrated, the embodiment is not limited thereto. Based on the visual object 821, the electronic device 101 may guide selection of the icon corresponding to the second user input. In the state 802 of displaying the visual object 821, the electronic device 101, which has received an input indicating selection of the visual object 821 may stop displaying the screen B 814 corresponding to an icon overlapping the visual object 821 on the portion 811, and stop displaying the visual object 821.

Referring to FIG. 8B, based on the second user input, the electronic device 101 may identify the release of the first user input maintained on the point p1 in the state 802 of displaying the screen B 814 together with the screen A 813. In case that the first user input is released, the electronic device 101 may switch from the state 802 to the state 803 of FIG. 8B. In the state 803, the electronic device 101 may display the screen A 813 and the screen B 814 selected by the first user input and/or the second user input on different portions 811 and 832 of the flexible display 150.

Referring to the exemplary state 803 of FIG. 8B, the electronic device 101 may display two screens (e.g., the screen A 813 and the screen B 813 of the state 802) by the first user input and the second user input, together with a home screen, similar to state 602 of FIG. 6B. For example, the electronic device 101 may display the screen A on the portion 811 of the flexible display 150, the screen B on the portion 832 of the flexible display 150 positioned on a second housing 112, and the home screen on a portion 833 of the flexible display 150 positioned on the third housing 113. The electronic device 101, which has received an input for executing a specified software application through the home screen may display an execution screen of the software application on the portion 833.

As described above, the electronic device 101 according to an embodiment may enter a state (e.g., the states 801 and 802) capable of receiving the second user input for configuring a combination of a plurality of screens including a specified screen (e.g., the screen A) corresponding to the first user input, based on the first user input maintained during switching from the half-folded state and/or the sub-folded state to the unfolded state.

FIG. 9 illustrates an exemplary flowchart of an electronic device according to an embodiment. An electronic device 101 of FIGS. 1 to 2 and/or an electronic device 310 of FIG. 3B may perform an operation of the electronic device described with reference to FIG. 9. For example, the electronic device 101 and/or a processor 210 of FIG. 2 may perform at least one of the operations of FIG. 9. At least one of the operations of FIG. 9 may be associated with at least one of the operations of FIG. 4.

Referring to FIG. 9, in operation 910, the processor of the electronic device according to an embodiment may display a list of screens that have been displayed on one or more displays of the electronic device based on a sub-folded state (or a half-folded state). The one or more displays of the operation 910 may include a display (e.g., the flexible display 150 and/or the cover display 152 of FIG. 2) that has been activated since the electronic device was turned on. The list displayed in the operation 910 may include the lists 520, 529, and 530 of FIGS. 5A to 5C.

Referring to FIG. 9, in operation 920, the processor of the electronic device according to an embodiment may receive a user input associated with the list. The user input may include a touch gesture for selecting at least one software application and/or at least one screen included in the list. The processor that receives the user input may display a visual object (e.g., the visual objects 521, 522, 523, 524, and 525 of FIG. 5A) indicating selection of a software application and/or screen corresponding to the user input in the list, or may change a mode of the visual object.

Referring to FIG. 9, in operation 930, the processor of the electronic device according to an embodiment may identify whether a state of the electronic device is switching from the sub-folded state of the operation 910 to an unfolded state. For example, the processor may obtain information indicating a posture of a multi-foldable housing of the electronic device by using a sensor (e.g., the sensor 230 of FIG. 2). The multi-foldable housing may include a first housing 111, a second housing 112, a third housing 113, a first hinge assembly 121, a second hinge assembly 122, or a combination thereof of FIGS. 3A and/or 3B. Based on the information, the processor may identify whether the state of the electronic device is switching from the sub-folded state to the unfolded state. Before switching to the unfolded state of the operation 930, or while maintaining the sub-folded state (930-no), the processor may receive a user input based on the operation 920. Based on switching to the unfolded state (930-yes), the processor may perform operation 940.

Referring to FIG. 9, in the operation 940, the processor of the electronic device according to an embodiment may display one or more screens associated with the user input received in the sub-folded state on the flexible display (e.g., the flexible display 150 of FIGS. 1 to 2, 3A, and/or 3B). The one or more screens may include a screen selected by the user input in the operation 920. In case that a plurality of screens is selected by the user input in the operation 920, the processor may display the plurality of screens on different portions of the flexible display, respectively, based on operations 455 and 460 of FIG. 4.

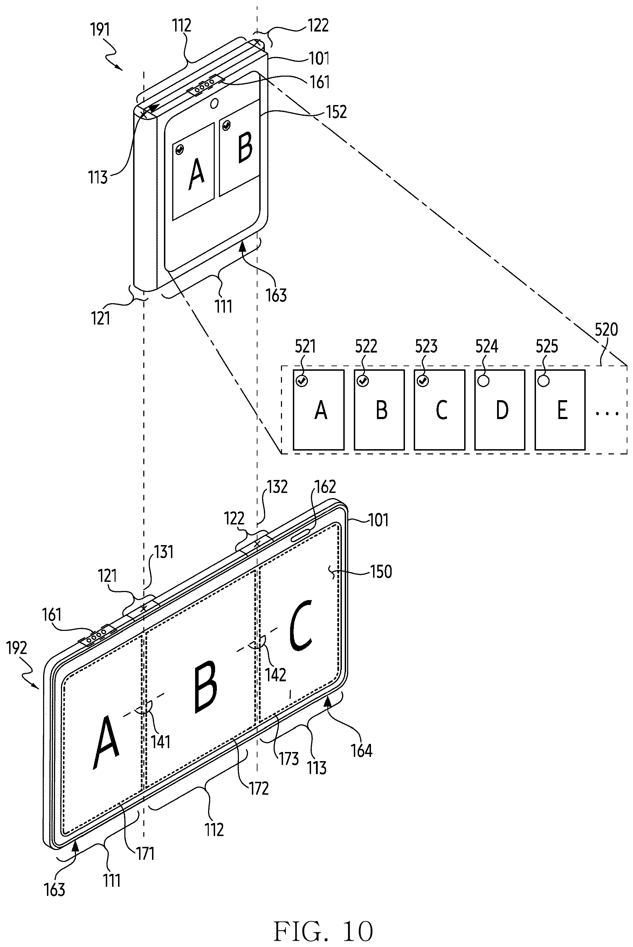

An embodiment in which the processor displays a list of the operation 910 based on the sub-folded state and/or the half-folded state has been described, but the embodiment is not limited thereto. Hereinafter, an exemplary operation of the electronic device displaying the list in a folded state is described with reference to FIG. 10.

FIG. 10 illustrates an exemplary UI of an electronic device 101 displayed based on an input received in a folded state. The electronic device 101 of FIGS. 1, 2, and/or 3A may perform an operation of the electronic device 101 described with reference to FIG. 10. The electronic device 101 and/or a processor 210 of FIG. 2 may perform the operation of the electronic device 101 described with reference to FIG. 10. At least one of the operations of FIG. 10 may be associated with the operations of the electronic device of FIGS. 4 and/or 9. Although the operation of FIG. 10 is described based on the electronic device 101 of FIG. 3A, the embodiment is not limited thereto, and an electronic device 310 of FIG. 3B may also perform the operation of FIG. 10.

Referring to FIG. 10, exemplary states 191 and 192 of the electronic device 101 corresponding to the folded state and an unfolded state, respectively, are illustrated. In the state 191 corresponding to the folded state, the electronic device 101 may display a list 520 of a plurality of software applications that have been executed by the processor of the electronic device 101 on a cover display 152. The list 520 may include a plurality of screens that have been displayed based on the plurality of software applications. As described above with reference to FIG. 5A, the electronic device 101 may receive a user input for selecting at least one screen to be displayed in the unfolded state by using the horizontally scrollable list 520 of the cover display 152. Along with a plurality of screens displayed based on the list 520, the electronic device 101 may display visual objects 521, 522, 523, 524, and 525 overlapped on each of the plurality of screens.

Referring to FIG. 10, the exemplary state 191 in which a screen A, a screen B, and a screen C are selected based on one or more user inputs is illustrated. Based on the one or more user inputs, the electronic device 101 may display the visual objects 521, 522, and 523 overlapped on the screen A, the screen B, and the screen C based on a first mode indicating selection of the screen. In the list 520, the visual objects 524 and 525 different from the visual objects 521, 522, and 523 may be displayed based on a second mode different from the first mode. From the state 191, based on switching to the unfolded state based on rotation of a first housing 111 and/or a third housing 113, the electronic device 101 may enter the state 192 of FIG. 10.

Referring to FIG. 10, in the state 192 after the state 191, the electronic device 101 may display the screen A, the screen B, and the screen C that have been selected in the state 191 on different portions 171, 172, and 173 of a flexible display 150. The screen A, the screen B, and the screen C displayed on the portions 171, 172, and 173 spaced apart from each other may have a PBP layout on the flexible display 150. In the state 192 of displaying three screens (e.g., the screen A, the screen B, and the screen C), the electronic device 101 including three rotatably coupled housings (e.g., the first housing 111, the second housing 112, and the third housing 113) may display the screens on the portions 171, 172, and 713 of the flexible display 150 corresponding to each of the housings, respectively.

As described above, the electronic device 101 according to an embodiment may receive an input for selecting one or more screens to be displayed after switching to the unfolded state, in a state before the unfolded state (e.g., the sub-folded state, the half-folded state, and/or the folded state). Based on the input, the electronic device 101 may display one or more screens specified by the input on an active region (e.g., the entire active region of the flexible display 150) that is maximized in the unfolded state. Based on the input, the electronic device 101 may support a function for reserving one or more screens to be displayed in the unfolded state.

FIG. 11 is a block diagram illustrating an electronic device 1101 in a network environment 1100 according to various embodiments. Referring to FIG. 11, the electronic device 1101 in the network environment 1100 may communicate with an electronic device 1102 via a first network 1198 (e.g., a short-range wireless communication network), or at least one of an electronic device 1104 or a server 1108 via a second network 1199 (e.g., a long-range wireless communication network). According to an embodiment, the electronic device 1101 may communicate with the electronic device 1104 via the server 1108. According to an embodiment, the electronic device 1101 may include a processor 1120, memory 1130, an input module 1150, a sound output module 1155, a display module 1160, an audio module 1170, a sensor module 1176, an interface 1177, a connecting terminal 1178, a haptic module 1179, a camera module 1180, a power management module 1188, a battery 1189, a communication module 1190, a subscriber identification module (SIM) 1196, or an antenna module 1197. In some embodiments, at least one of the components (e.g., the connecting terminal 1178) may be omitted from the electronic device 1101, or one or more other components may be added in the electronic device 1101. In some embodiments, some of the components (e.g., the sensor module 1176, the camera module 1180, or the antenna module 1197) may be implemented as a single component (e.g., the display module 1160).

The processor 1120 may execute, for example, software (e.g., a program 1140) to control at least one other component (e.g., a hardware or software component) of the electronic device 1101 coupled with the processor 1120, and may perform various data processing or computation. According to an embodiment, as at least part of the data processing or computation, the processor 1120 may store a command or data received from another component (e.g., the sensor module 1176 or the communication module 1190) in volatile memory 1132, process the command or the data stored in the volatile memory 1132, and store resulting data in non-volatile memory 1134. According to an embodiment, the processor 1120 may include a main processor 1121 (e.g., a central processing unit (CPU) or an application processor (AP)), or an auxiliary processor 1123 (e.g., a graphics processing unit (GPU), a neural processing unit (NPU), an image signal processor (ISP), a sensor hub processor, or a communication processor (CP)) that is operable independently from, or in conjunction with, the main processor 1121. For example, when the electronic device 1101 includes the main processor 1121 and the auxiliary processor 1123, the auxiliary processor 1123 may be adapted to consume less power than the main processor 1121, or to be specific to a specified function. The auxiliary processor 1123 may be implemented as separate from, or as part of the main processor 1121.

The auxiliary processor 1123 may control at least some of functions or states related to at least one component (e.g., the display module 1160, the sensor module 1176, or the communication module 1190) among the components of the electronic device 1101, instead of the main processor 1121 while the main processor 1121 is in an inactive (e.g., sleep) state, or together with the main processor 1121 while the main processor 1121 is in an active state (e.g., executing an application). According to an embodiment, the auxiliary processor 1123 (e.g., an image signal processor or a communication processor) may be implemented as part of another component (e.g., the camera module 1180 or the communication module 1190) functionally related to the auxiliary processor 1123. According to an embodiment, the auxiliary processor 1123 (e.g., the neural processing unit) may include a hardware structure specified for artificial intelligence model processing. An artificial intelligence model may be generated by machine learning. Such learning may be performed, e.g., by the electronic device 1101 where the artificial intelligence is performed or via a separate server (e.g., the server 1108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1130 may store various data used by at least one component (e.g., the processor 1120 or the sensor module 1176) of the electronic device 1101. The various data may include, for example, software (e.g., the program 1140) and input data or output data for a command related thereto. The memory 1130 may include the volatile memory 1132 or the non-volatile memory 1134.

The program 1140 may be stored in the memory 1130 as software, and may include, for example, an operating system (OS) 1142, middleware 1144, or an application 1146.

The input module 1150 may receive a command or data to be used by another component (e.g., the processor 1120) of the electronic device 1101, from the outside (e.g., a user) of the electronic device 1101. The input module 1150 may include, for example, a microphone, a mouse, a keyboard, a key (e.g., a button), or a digital pen (e.g., a stylus pen).

The sound output module 1155 may output sound signals to the outside of the electronic device 1101. The sound output module 1155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1160 may visually provide information to the outside (e.g., a user) of the electronic device 1101. The display module 1160 may include, for example, a display, a hologram device, or a projector and control circuitry to control a corresponding one of the display, hologram device, and projector. According to an embodiment, the display module 1160 may include a touch sensor adapted to detect a touch, or a pressure sensor adapted to measure the intensity of force incurred by the touch.

The audio module 1170 may convert a sound into an electrical signal and vice versa. According to an embodiment, the audio module 1170 may obtain the sound via the input module 1150, or output the sound via the sound output module 1155 or a headphone of an external electronic device (e.g., an electronic device 1102) directly (e.g., wiredly) or wirelessly coupled with the electronic device 1101.

The sensor module 1176 may detect an operational state (e.g., power or temperature) of the electronic device 1101 or an environmental state (e.g., a state of a user) external to the electronic device 1101, and then generate an electrical signal or data value corresponding to the detected state. According to an embodiment, the sensor module 1176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1177 may support one or more specified protocols to be used for the electronic device 1101 to be coupled with the external electronic device (e.g., the electronic device 1102) directly (e.g., wiredly) or wirelessly. According to an embodiment, the interface 1177 may include, for example, a high definition multimedia interface (HDMI), a universal serial bus (USB) interface, a secure digital (SD) card interface, or an audio interface.

A connecting terminal 1178 may include a connector via which the electronic device 1101 may be physically connected with the external electronic device (e.g., the electronic device 1102). According to an embodiment, the connecting terminal 1178 may include, for example, a HDMI connector, a USB connector, a SD card connector, or an audio connector (e.g., a headphone connector).

The haptic module 1179 may convert an electrical signal into a mechanical stimulus (e.g., a vibration or a movement) or electrical stimulus which may be recognized by a user via his tactile sensation or kinesthetic sensation. According to an embodiment, the haptic module 1179 may include, for example, a motor, a piezoelectric element, or an electric stimulator.

The camera module 1180 may capture a still image or moving images. According to an embodiment, the camera module 1180 may include one or more lenses, image sensors, image signal processors, or flashes.

The power management module 1188 may manage power supplied to the electronic device 1101. According to an embodiment, the power management module 1188 may be implemented as at least part of, for example, a power management integrated circuit (PMIC).

The battery 1189 may supply power to at least one component of the electronic device 1101. According to an embodiment, the battery 1189 may include, for example, a primary cell which is not rechargeable, a secondary cell which is rechargeable, or a fuel cell.

The communication module 1190 may support establishing a direct (e.g., wired) communication channel or a wireless communication channel between the electronic device 1101 and the external electronic device (e.g., the electronic device 1102, the electronic device 1104, or the server 1108) and performing communication via the established communication channel. The communication module 1190 may include one or more communication processors that are operable independently from the processor 1120 (e.g., the application processor (AP)) and supports a direct (e.g., wired) communication or a wireless communication. According to an embodiment, the communication module 1190 may include a wireless communication module 1192 (e.g., a cellular communication module, a short-range wireless communication module, or a global navigation satellite system (GNSS) communication module) or a wired communication module 1194 (e.g., a local area network (LAN) communication module or a power line communication (PLC) module). A corresponding one of these communication modules may communicate with the external electronic device via the first network 1198 (e.g., a short-range communication network, such as Bluetooth^{™}, wireless-fidelity (Wi-Fi) direct, or infrared data association (IrDA)) or the second network 1199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1192 may identify and authenticate the electronic device 1101 in a communication network, such as the first network 1198 or the second network 1199, using subscriber information (e.g., international mobile subscriber identity (IMSI)) stored in the subscriber identification module 1196.

The wireless communication module 1192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1192 may support a high-frequency band (e.g., the mmWave band) to achieve, e.g., a high data transmission rate. The wireless communication module 1192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1192 may support various requirements specified in the electronic device 1101, an external electronic device (e.g., the electronic device 1104), or a network system (e.g., the second network 1199). According to an embodiment, the wireless communication module 1192 may support a peak data rate (e.g., 20Gbps or more) for implementing eMBB, loss coverage (e.g., 1164dB or less) for implementing mMTC, or U-plane latency (e.g., 0.5ms or less for each of downlink (DL) and uplink (UL), or a round trip of 11ms or less) for implementing URLLC.

The antenna module 1197 may transmit or receive a signal or power to or from the outside (e.g., the external electronic device) of the electronic device 1101. According to an embodiment, the antenna module 1197 may include an antenna including a radiating element composed of a conductive material or a conductive pattern formed in or on a substrate (e.g., a printed circuit board (PCB)). According to an embodiment, the antenna module 1197 may include a plurality of antennas (e.g., array antennas). In such a case, at least one antenna appropriate for a communication scheme used in the communication network, such as the first network 1198 or the second network 1199, may be selected, for example, by the communication module 1190 (e.g., the wireless communication module 1192) from the plurality of antennas. The signal or the power may then be transmitted or received between the communication module 1190 and the external electronic device via the selected at least one antenna. According to an embodiment, another component (e.g., a radio frequency integrated circuit (RFIC)) other than the radiating element may be additionally formed as part of the antenna module 1197. However, the aforementioned materials must not be construed as limiting and other materials may also be used.

According to various embodiments, the antenna module 1197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1101 and the external electronic device 1104 via the server 1108 coupled with the second network 1199. Each of the electronic devices 1102 or 1104 may be a device of a same type as, or a different type, from the electronic device 1101. According to an embodiment, all or some of operations to be executed at the electronic device 1101 may be executed at one or more of the external electronic devices 1102, 1104, or 1108. For example, if the electronic device 1101 should perform a function or a service automatically, or in response to a request from a user or another device, the electronic device 1101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1101. The electronic device 1101 may provide the outcome, with or without further processing of the outcome, as at least part of a reply to the request. To that end, a cloud computing, distributed computing, mobile edge computing (MEC), or client-server computing technology may be used, for example. The electronic device 1101 may provide ultra low-latency services using, e.g., distributed computing or mobile edge computing. In another embodiment, the external electronic device 1104 may include an internet-of-things (IoT) device. The server 1108 may be an intelligent server using machine learning and/or a neural network. According to an embodiment, the external electronic device 1104 or the server 1108 may be included in the second network 1199. The electronic device 1101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1140) including one or more instructions that are stored in a storage medium (e.g., internal memory 1136 or external memory 1138) that is readable by a machine (e.g., the electronic device 1101). For example, a processor (e.g., the processor 1120) of the machine (e.g., the electronic device 1101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively, or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added. The electronic device 1101 of FIG. 11 may be an example of an electronic device 101 of FIGS. 1 to 10 and/or an electronic device 310 described with reference to FIG. 3B.

In an embodiment, a method of organizing one or more screens to be displayed in a designated state (e.g., the unfolded state) may be required. As described above, an electronic device (e.g., the electronic device 101 of FIG.1, the electronic device 310 of FIG. 3B, and/or the electronic device 1101 of FIG. 11) according to an embodiment may comprise a first housing (e.g., the first housing 111 of FIGS. 3A and/or 3B), a second housing (e.g., the second housing 112 of FIGS. 3A and/or 3B) rotatably coupled to the first housing, a third housing (e.g., the third housing 113 of FIGS. 3A and/or 3B) rotatably coupled to the second housing, a first display (e.g., the cover display 152 of FIG. 2) positioned on a first surface of the first housing, a second display (e.g., the flexible display 150 of FIG. 2) including a first displaying area corresponding to a second surface of the first housing, a second displaying area corresponding to a third surface of the second housing and a third displaying area corresponding to a fourth surface of the third housing, a first sensor for detecting an angle between the first housing and the second housing, a second sensor (e.g., the sensor 230 of FIG. 2) for detecting an angle between the second housing and the third housing, a memory (e.g., the memory 215 of FIG. 2) for storing instructions, and a processor (e.g., the processor 210 of FIG. 2) for executing the instructions. The processor may be configured to display, in a state that the electronic device is folded, at least one executed application by using the first display. The processor may be configured to display, in case that the electronic device is switched from the folded state to a sub-folded state, information associated with the at least one executed application in the first displaying area of the first housing. The processor may be configured to receive, in the sub-folded state, a user input with respect to the information being displayed in the first displaying area. The processor may be configured to display, in case that the electronic device is switched to an unfolded state from the sub-folded state, at least one screen corresponding to the user input in at least one of the first displaying area, the second displaying area and the third displaying area of the second display. The electronic device according to an embodiment may select or identify at least one screen to be displayed in the unfolded state before switching to the unfolded state.

According to an embodiment an electronic device may be provided for displaying one or more screens, in particular to organize one or more screens provided from a software application on a display. Thereby, the electronic device is able execute a function for organizing one or more screens displayed on the display based on the different states of the electronic device, which are divided by a shape of the multi-foldable housing. The electronic device according to the present invention can determine a screen to be displayed in the unfolded state by using a UI displayed in the sub-folded state and/or the half-folded state. In case of determining to display a plurality of screens in the unfolded state, the electronic device can display the plurality of screens on different portions of the flexible display, respectively.

In one or more embodiments, in the state that the electronic device is folded, the first housing and the third housing may be configured to be sequentially folded with respect to the second housing.

In one or more embodiments, in the sub-folded state, the first housing may be configured to be unfolded with respect to the second housing. The third housing may be configured to be folded with respect to the second housing.

In one or more embodiments, in the unfolded state, the first housing and the third housing may be configured to be unfolded with respect to the second housing.

In one or more embodiments, the processor may be configured to receive, while displaying a plurality of screens including the at least one screen on the first displaying area, the user input for selecting the at least one screen among the plurality of screens.

In one or more embodiments, the processor may be configured to display visual objects superimposed on each of the plurality of screens configured to be toggled by the user input.

In one or more embodiments, the processor may be configured to adjust, in the sub-folded state where a plurality of screens is selected by a first user input, ratio of sizes of the plurality of screens occupying an entire active region of the second display including the first displaying area, the second displaying area and the third displaying area, at least based on a second user input for selecting a border line between the plurality of screens.

In one or more embodiments, the processor may be configured to display, in the unfolded state after receiving the user input for selecting a plurality of screens, the plurality of screens that is separated by at least one of a first border line between the second surface and the third surface or a second borderline between the third surface and the fourth surface.

In one or more embodiments, the processor may be configured to display, in the unfolded state after receiving the user input for selecting a plurality of screens exceeding three, the plurality of screens on each of portions of the active region which are equally divided by the number of the plurality of screens.

In one or more embodiments, the processor may be configured to display, in the sub-folded state, the one or more screens that have been displayed based on one or more software applications executed by the processor.

In one or more embodiments, the processor may be configured to display, based on identifying the third surface and the fourth surface which are facing to each other and identifying the second surface and the third surface which are facing to each other, the at least one executed application in the state that the electronic device is folded. The processor may be configured to display, based on identifying the third surface and the fourth surface which are facing to each other and identifying that directions of the second surface and the third surface are identical to each other based on the one or more sensors, the information based on the sub-folded state. The processor may be configured to display, based on identifying that directions of the second surface, the third surface and the fourth surface are identical to each other based on the one or more sensors, the at least one screen corresponding to the user input based on the unfolded state.

In one or more embodiments, the processor may be configured to display, in a state that the electronic device is folded, at least one executed application by using the first display; to display, when the electronic device is switched from the folded state to a sub-folded state, information associated with the at least one executed application in the first displaying area of the first housing; to receive, in the sub-folded state, a user input with respect to the information being displayed in the first displaying area; and to display, when the electronic device is switched to an unfolded state from the sub-folded state, at least one screen corresponding to the user input in at least one of the first displaying area, the second displaying area and the third displaying area of the second display.

As described above, a method of an electronic device according to an embodiment may comprise displaying, in a state that the electronic device is folded, at least one executed application by using a first display positioned on a first surface of a first housing of the electronic device. The method may comprise displaying, in case that the electronic device is switched to a sub-folded state from the folded state, information with associated with the at least one executed application in a first displaying area of the second display positioned on a second surface of the first housing opposite to the first surface. The method may comprise receiving, in the sub-folded state, a user input with respect to the information displayed in the first displaying area. The method may comprise displaying, in case that the electronic device is switched from the sub-folded state to an unfolded state, at least one screen corresponding to the user input in at least one area among the first displaying area, a second displaying area on a third surface on the second housing rotatably coupled to the first housing, and a third displaying area on a fourth surface of a third housing rotatably coupled to the second housing of the second display.

In one or more embodiments, the receiving may comprise receiving, while displaying a plurality of screens including the first screen on the portion, the user input for selecting the at least one screen among the plurality of screens.

In one or more embodiments, the method may comprise displaying visual objects superimposed on each of the plurality of screens configured to be toggled by the user input.

In one or more embodiments, the receiving may comprise adjusting, in the sub-folded state where a plurality of screens is selected by a first user input, ratio of sizes of the plurality of screens occupying an entire active region of the second display including the first displaying area, the second displaying area and the third displaying area, at least based on a second user input for selecting a border line between the plurality of screens.

In one or more embodiments, displaying the at least one screen corresponding to the user input may comprise displaying, in the unfolded state after receiving the user input for selecting a plurality of screens, the plurality of screens separated by at least one of a first border line between the second surface and the third surface or a second border line between the third surface and the fourth surface.

In one or more embodiments, displaying the at least one screen corresponding to the user input may comprise displaying, in the unfolded state after receiving the user input for selecting a plurality of screens exceeding three, the plurality of screens on each of portions of the active region which are equally divided by the number of the plurality of screens.

In one or more embodiments, displaying the one or more screens may comprise, in the sub-folded state, displaying the one or more screens that have been displayed based on one or more software applications executed by a processor of the electronic device.

In one or more embodiments, the method may comprise displaying, based on identifying the third surface and the fourth surface which are facing to each other and identifying the second surface and the third surface which are facing to each other, the at least one executed application in the state that the electronic device is folded. The method may comprise displaying, based on identifying the third surface and the fourth surface which are facing to each other and identifying that directions of the second surface and the third surface are identical to each other based on the one or more sensors, the information based on the sub-folded state. The method may comprise displaying, based on identifying that directions of the second surface, the third surface and the fourth surface are identical to each other based on the one or more sensors, the at least one screen corresponding to the user input based on the unfolded state.

As described above, an electronic device according to an embodiment may comprise a first housing, a second housing rotatably coupled to the first housing, a third housing rotatably coupled to the second housing, a flexible display including portions positioned on each of a first surface of the first housing, a second surface of the second housing, and a third surface of the third housing, one or more sensors, a memory for storing instructions, and a processor for executing the instructions. The processor may be configured to display, in a sub-folded state in which a portion of the flexible display positioned on the first surface among the portions identified based on the one or more sensors is exposed to an outside, at least one screen which was executed by the processor on the portion of the flexible display positioned on the first surface. The processor may be configured to display, in an unfolded state, switched from the sub-folded state, and in which directions of the portions match each other, at least a screen associated with a user input received in the sub-folded state on an entire active region of the flexible display including the portions.

In one or more embodiments, the processor may be configured to display, in the sub-folded state, a plurality of screens corresponding to each of a plurality of software applications that have been executed by the processor. The processor may be configured to receive the user input for selecting at least one screen among the plurality of screens.

In one or more embodiments, the processor may be configured to display visual objects having a mode toggled by the user input on each of the plurality of screens.

In one or more embodiments, the processor may be configured to display, in the unfolded state after receiving the user input for selecting a plurality of screens, the plurality of screens separated by at least one of a first border line between the first surface and the second surface or a second border line between the second surface and the third surface.

As described above, a method of an electronic device according to an embodiment may comprise displaying, in a sub-folded state in which a first portion among portions of a flexible display of the electronic device identified based on one or more sensors of the electronic device is exposed to an outside, at least one screen which was executed by a processor of the electronic device on the first portion. The method may comprise displaying, in an unfolded state of the electronic device switched from the sub-folded state, at least one screen associated with a user input received in the sub-folded state on an entire active region of the flexible display including the first portion.

In one or more embodiments, displaying at least one screen on the first portion may comprise displaying, in the sub-folded state, a plurality of screens corresponding to each of a plurality of software applications that have been executed by the processor. The method may comprise receiving the user input for selecting at least one screen among the plurality of screens.

In one or more embodiments, displaying the plurality of screens may comprise displaying visual objects having a mode toggled by the user input on each of the plurality of screens.

In one or more embodiments, displaying the at least one screen on the entire active region may comprise displaying, in the unfolded state after receiving a user input for selecting a plurality of screens, the plurality of screens separated by at least one of a first border line between a first housing in which the first portion of the flexible display is positioned and a second portion of the flexible display positioned on a second housing rotatably coupled to the first housing or a second border line between the second housing and a third portion of the flexible display positioned on a third housing rotatably coupled to the second housing.

The device described above may be implemented as a hardware component, a software component, and/or a combination of a hardware component and a software component. In one or more embodiments, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include may be those configured to store program instructions, including a magnetic medium such as a hard disk, floppy disk, and magnetic tape, optical recording medium such as a CD-ROM and DVD, magneto-optical medium, such as a floptical disk, and ROM, RAM, flash memory, and the like. In addition, examples of other media may include recording media or storage media managed by app stores that distribute applications, sites that supply or distribute various software, servers, and the like.

As described above, although the embodiments have been described with limited examples and drawings, a person who has ordinary knowledge in the relevant technical field is capable of various modifications while remaining within the scope of the appended claims.

## Claims

1. An electronic device (101), comprising:
a foldable housing including a first housing (111); a second housing (112) rotatably coupled to the first housing (111), and a third housing (113) rotatably coupled to the second housing (112);
a first display (152) disposed on a first side of the foldable housing;
a second display (150) disposed on a second side of the foldable housing and including a first display area, a second display area and a third display;
a first sensor (230) for detecting an angle between the first housing (111) and the second housing (112);
a second sensor (230) for detecting an angle between the second housing (112) and the third housing (113);
memory (215) storing instructions; and
at least one processor (210, 1120) for executing the instructions, wherein the at least processor (210, 1120), when executing the instructions, causes the device to:
display, via the first display (152), a first execution screen of a first application in a folded state (191) of the electronic device (101);
identify that a state of the electronic device (101) is changed from the folded state to a partially folded state based on the sensor information provided by the first sensor and/or the second sensor (230);
display, on at least one display area of the second display (150), a plurality of visual objects respectively corresponding to recently executed applications;
**characterised in that**:
in response to identifying that the state of the electronic device (101) is changed from the partially-folded state (192, 501) to an unfolded state, without a user input with respect to the plurality of visual objects, display a second screen of the first application in at least one display area of the first display area, the second display area, and the third display area of the second display (150); and **in that**
based on a state of the electronic device (101) switched to an unfolded state (193, 601) from the partially-folded state (192, 501) after receiving the user input with respect to the plurality of visual objects, display at least one screen corresponding to the user input in at least one of the first display area, the second display area and the third display area of the second display (150).

2. The electronic device (101) of claim 1, wherein the first housing (111) and the third housing (113) are, in the folded state (191), configured to be sequentially folded with respect to the second housing (112).

3. The electronic device (101) of claim 1, wherein the first housing (111) is, in the partially-folded state (192, 501), configured to be unfolded with respect to the second housing (112), wherein the third housing (113) is configured to be folded with respect to the second housing (112).

4. The electronic device (101) of claim 1, wherein the first housing (111) and the third housing (113) are, in the unfolded state (193, 601), configured to be unfolded with respect to the second housing (112).

5. The electronic device (101, 310, 1101) of any of claims 1 to 4, wherein the plurality of visual objects includes
a plurality of screen shots of screens which were displayed based on execution of a plurality of applications; and
a plurality of user selectable objects (521 to 525) respectively superimposed on the plurality of screen shots.

6. The electronic device (101, 310, 1101) of claim 1 to claim 5, wherein each of the plurality of user selectable objects (521 to 525) is configured to be toggled by the user input.

7. The electronic device (101) of claim 1 to claim 6, wherein the processor (210) is configured to:
adjust, in the partially-folded state (192, 501) where a plurality of screens (A to E) are selected by the user input, ratio of sizes of the plurality of screens (A to E) occupying an entire active region of the second display (150) including the first display area, the second display area and the third display area, at least based on a second user input for selecting a border line between the plurality of screens.

8. The electronic device (101) of claim 1 to claim 7, wherein the processor (210) is configured to:
display, in the unfolded state (193, 601) after receiving the user input for selecting a plurality of screens (A to E), the plurality of screens (Ato E) that is separated by at least one of a first border line between the second surface and the third surface or a second borderline between the third surface and the fourth surface.

9. The electronic device (101) of claim 1 to claim 8, wherein the processor (210) is configured to:
display, in the unfolded state (193, 601) after receiving the user input for selecting a plurality of screens (A to E) exceeding three, the plurality of screens (A to E) on each of portions of the active region which are equally divided by a number of the plurality of screens (A to E).

10. The electronic device (101) of claim 1 to claim 9, wherein the processor (210) is configured to:
display, in the partially-folded state (192, 501), the one or more screens (A to E) which was displayed based on one or more applications (1146) executed by the processor (210).

11. The electronic device (101) of claim 1 to claim 10, wherein the processor (210) is configured to:
display, based on identifying the third surface and the fourth surface which are facing to each other and identifying the second surface and the third surface which are facing to each other, the at least one executed application (1146) in the folded state (191);
display, based on identifying the third surface and the fourth surface which are facing to each other and identifying directions of the second surface and the third surface which are identical to each other based on the sensor (230), the information based on the partially-folded state (192, 501);
display, based on identifying directions of the second surface, the third surface and the fourth surface which are identical to each other based on the one or more sensors (230), the at least one screen corresponding to the user input based on the unfolded state (193, 601).

12. A method of an electronic device (101), comprising the steps of:
displaying, via a first display (152) of the electronic device (101), a first execution screen of a first application in a folded state (191) of the electronic device (101, 310, 1101);
identifying that a state of the electronic device (101) is changed from the folded state to a partially-folded state based on sensor information provided by a first sensor (230) and/or the second sensor (230);
displaying, on at least one display area of a second display (150), a plurality of visual objects respectively corresponding to recently executed applications;
**characterised by** the steps of:
in response to identifying that the state of the electronic device (101) is changed from the partially-folded state (192, 501) to a unfolded state, without a user input with respect to the plurality of visual objects, displaying a second screen of the first application in at least one display area of a first display area, a second display area, and a third display area of the second display (150) of the electronic device (101);
and
based on a state of the electronic device (101) switched to an unfolded state (193, 601) from the partially-folded state (192, 501) after receiving the user input with respect to the plurality of visual objects, displaying at least one screen corresponding to the user input in at least one of the first display area, the second display area, and the third display area of the second display (150).

13. The method of claim 12, further comprising:
receiving, while displaying the plurality of visual objects including a plurality of screens (A to E) including the first screen on the portion, the user input for selecting the at least one screen among the plurality of screens.

14. The method of claim 12 or 13, wherein each of the plurality of user selectable objects (521 to 525) is configured to be toggled by the user input.

15. The method of any of claims 13 to 14, further comprising:
adjusting, in the partially-folded state (192, 501) where a plurality of screens (A to E) are selected by the user input, ratio of sizes of the plurality of screens (A to E) occupying an entire active region of the second display (150) including the first displaying area, the second displaying area and the third displaying area, at least based on a second user input for selecting a border line between the plurality of screens (A to E).

## Patentansprüche

1. Elektronische Vorrichtung (101), umfassend:
ein faltbares Gehäuse, das ein erstes Gehäuse (111), ein zweites Gehäuse (112), das drehbar mit dem ersten Gehäuse (111) gekoppelt ist, und ein drittes Gehäuse (113), das drehbar mit dem zweiten Gehäuse (112) gekoppelt ist, umfasst;
eine erste Anzeige (152), die auf einer ersten Seite des faltbaren Gehäuses angeordnet ist;
eine zweite Anzeige (150), die auf einer zweiten Seite des faltbaren Gehäuses angeordnet ist und einen ersten Anzeigebereich, einen zweiten Anzeigebereich und eine dritte Anzeige umfasst;
einen ersten Sensor (230) zum Erfassen eines Winkels zwischen dem ersten Gehäuse (111) und dem zweiten Gehäuse (112);
einen zweiten Sensor (230) zum Erfassen eines Winkels zwischen dem zweiten Gehäuse (112) und dem dritten Gehäuse (113);
einen Speicher (215), im dem Befehle gespeichert sind; und
mindestens einen Prozessor (210, 1120) zum Ausführen der Befehle, wobei der mindestens eine Prozessor (210, 1120) bei der Ausführung der Befehle die Vorrichtung dazu veranlasst:
über die erste Anzeige (152) einen ersten Ausführungsbildschirm einer ersten Anwendung in einem gefalteten Zustand (191) der elektronischen Vorrichtung (101) anzuzeigen;
basierend auf den von dem ersten Sensor und/oder dem zweiten Sensor (230) bereitgestellten Sensorinformationen zu identifizieren, dass ein Zustand der elektronischen Vorrichtung (101) von dem gefalteten Zustand in einen teilweise gefalteten Zustand geändert wird;
auf mindestens einem Anzeigebereich der zweiten Anzeige (150) eine Vielzahl von visuellen Objekten anzuzeigen, die jeweils kürzlich ausgeführten Anwendungen entsprechen;
**dadurch gekennzeichnet, dass**:
als Reaktion auf die Identifizierung, dass der Zustand der elektronischen Vorrichtung (101) vom teilweise gefalteten Zustand (192, 501) in einen entfalteten Zustand geändert wird, ohne dass eine Benutzereingabe in Bezug auf die Vielzahl visueller Objekte erfolgt, ein zweiter Bildschirm der ersten Anwendung in mindestens einem Anzeigebereich von dem ersten Anzeigebereich, dem zweiten Anzeigebereich und dem dritten Anzeigebereich der zweiten Anzeige (150) angezeigt wird; und dass
basierend darauf, dass ein Zustand der elektronischen Vorrichtung (101) nach dem Empfang der Benutzereingabe in Bezug auf die Vielzahl visueller Objekte von dem teilweise gefalteten Zustand (192, 501) in einen entfalteten Zustand (193, 601) umgeschaltet wird, mindestens ein der Benutzereingabe entsprechender Bildschirm in mindestens einem von dem ersten Anzeigebereich, dem zweiten Anzeigebereich und dem dritten Anzeigebereich der zweiten Anzeige (150) angezeigt wird.

2. Elektronische Vorrichtung (101) nach Anspruch 1, wobei das erste Gehäuse (111) und das dritte Gehäuse (113) im gefalteten Zustand (191) so konfiguriert sind, dass sie in Bezug auf das zweite Gehäuse (112) nacheinander gefaltet werden.

3. Elektronische Vorrichtung (101) nach Anspruch 1, wobei das erste Gehäuse (111) im teilweise gefalteten Zustand (192, 501) so konfiguriert ist, dass es in Bezug auf das zweite Gehäuse (112) entfaltet ist, wobei das dritte Gehäuse (113) so konfiguriert ist, dass es in Bezug auf das zweite Gehäuse (112) gefaltet ist.

4. Elektronische Vorrichtung (101) nach Anspruch 1, wobei das erste Gehäuse (111) und das dritte Gehäuse (113) im entfalteten Zustand (193, 601) so konfiguriert sind, dass sie in Bezug auf das zweite Gehäuse (112) entfaltet sind.

5. Elektronische Vorrichtung (101, 310, 1101) nach einem der Ansprüche 1 bis 4, wobei die Vielzahl visueller Objekte Folgendes umfasst:
eine Vielzahl von Screenshots von Bildschirmen, die auf der Grundlage der Ausführung einer Vielzahl von Anwendungen angezeigt wurden; und
eine Vielzahl vom Benutzer auswählbarer Objekte (521 bis 525), die jeweils der Vielzahl von Screenshots überlagert sind.

6. Elektronische Vorrichtung (101, 310, 1101) nach Anspruch 1 bis Anspruch 5, wobei jedes der Vielzahl vom Benutzer auswählbarer Objekte (521 bis 525) so konfiguriert ist, dass es durch die Benutzereingabe umgeschaltet wird.

7. Elektronische Vorrichtung (101) nach Anspruch 1 bis Anspruch 6, wobei der Prozessor (210) dazu konfiguriert ist,
im teilweise gefalteten Zustand (192, 501), in dem eine Vielzahl von Bildschirmen (A bis E) durch die Benutzereingabe ausgewählt ist, das Größenverhältnis der Vielzahl von Bildschirmen (A bis E), die einen gesamten aktiven Bereich der zweiten Anzeige (150) einschließlich des ersten Anzeigebereichs, des zweiten Anzeigebereichs und des dritten Anzeigebereichs einnehmen, zumindest auf der Grundlage einer zweiten Benutzereingabe zur Auswahl einer Begrenzungslinie zwischen den mehreren Bildschirmen einzustellen.

8. Elektronische Vorrichtung (101) nach Anspruch 1 bis Anspruch 7, wobei der Prozessor (210) dazu konfiguriert ist,
im entfalteten Zustand (193, 601) nach dem Empfang der Benutzereingabe zur Auswahl einer Vielzahl von Bildschirmen (A bis E) die Vielzahl von Bildschirmen (A bis E) anzuzeigen, die durch mindestens eine von einer ersten Begrenzungslinie zwischen der zweiten Oberfläche und der dritten Oberfläche und einer zweiten Begrenzungslinie zwischen der dritten Oberfläche und der vierten Oberfläche getrennt ist.

9. Elektronische Vorrichtung (101) nach Anspruch 1 bis Anspruch 8, wobei der Prozessor (210) dazu konfiguriert ist,
im entfalteten Zustand (193, 601) nach Empfang der Benutzereingabe zur Auswahl einer Vielzahl von Bildschirmen (A bis E), die drei übersteigt, die Vielzahl von Bildschirmen (A bis E) auf jedem der Abschnitte des aktiven Bereichs anzuzeigen, die durch eine Anzahl der Vielzahl von Bildschirmen (A bis E) gleichmäßig unterteilt sind.

10. Elektronische Vorrichtung (101) nach Anspruch 1 bis Anspruch 9, wobei der Prozessor (210) dazu konfiguriert ist,
im teilweise gefalteten Zustand (192, 501) den einen oder die mehreren Bildschirme (A bis E) anzuzeigen, die auf der Grundlage einer oder mehrerer vom Prozessor (210) ausgeführter Anwendungen (1146) angezeigt wurden.

11. Elektronische Vorrichtung (101) nach Anspruch 1 bis Anspruch 10, wobei der Prozessor (210) dazu konfiguriert ist,
auf der Grundlage der Identifizierung der dritten und der vierten Oberfläche, die einander zugewandt sind, und der Identifizierung der zweiten und der dritten Oberfläche, die einander zugewandt sind, die mindestens eine ausgeführte Anwendung (1146) im gefalteten Zustand (191) anzuzeigen;
auf der Grundlage der Identifizierung der dritten und der vierten Oberfläche, die einander zugewandt sind, und der Identifizierung von Richtungen der zweiten und der dritten Oberfläche, die basierend auf dem Sensor (230) identisch zueinander sind, die Informationen basierend auf dem teilweise gefalteten Zustand (192, 501) anzuzeigen;
basierend auf der Identifizierung von Richtungen der zweiten Oberfläche, der dritten Oberfläche und der vierten Oberfläche, die basierend auf dem einen oder den mehreren Sensoren (230) identisch zueinander sind, den mindestens einen der Benutzereingabe entsprechenden Bildschirm basierend auf dem entfalteten Zustand (193, 601) anzuzeigen.

12. Verfahren einer elektronischen Vorrichtung (101), umfassend die folgenden Schritte:
Anzeigen eines ersten Ausführungsbildschirms einer ersten Anwendung in einem gefalteten Zustand (191) der elektronischen Vorrichtung (101, 310, 1101) über eine erste Anzeige (152) der elektronischen Vorrichtung (101);
Identifizieren basierend auf den von einem ersten Sensor (230) und/oder dem zweiten Sensor (230) bereitgestellten Sensorinformationen, dass der Zustand der elektronischen Vorrichtung (101) vom gefalteten Zustand in einen teilweise gefalteten Zustand geändert wird;
Anzeigen einer Vielzahl von visuellen Objekten, die jeweils kürzlich ausgeführten Anwendungen entsprechen, auf mindestens einem Anzeigebereich einer zweiten Anzeige (150);
**gekennzeichnet durch** die folgenden Schritte:
Anzeigen eines zweiten Bildschirms der ersten Anwendung in mindestens einem Anzeigebereich von einem ersten Anzeigebereich, einem zweiten Anzeigebereich und einem dritten Anzeigebereich der zweiten Anzeige (150) der elektronischen Vorrichtung (101) als Reaktion auf die Identifizierung, dass der Zustand der elektronischen Vorrichtung (101) vom teilweise gefalteten Zustand (192, 501) in einen entfalteten Zustand geändert wird, ohne dass eine Benutzereingabe in Bezug auf die Vielzahl visueller Objekte erfolgt;
und
Anzeigen mindestens eines der Benutzereingabe entsprechenden Bildschirms in mindestens einem von dem ersten Anzeigebereich, dem zweiten Anzeigebereich und dem dritten Anzeigebereich der zweiten Anzeige (150) basierend darauf, dass ein Zustand der elektronischen Vorrichtung (101) nach dem Empfang der Benutzereingabe in Bezug auf die Vielzahl visueller Objekte von dem teilweise gefalteten Zustand (192, 501) in einen entfalteten Zustand (193, 601) umgeschaltet wird.

13. Verfahren nach Anspruch 12, ferner umfassend:
Empfangen der Benutzereingabe zur Auswahl des mindestens einen Bildschirms aus der Vielzahl von Bildschirmen, während die Vielzahl visueller Objekte einschließlich einer Vielzahl von Bildschirmen (A bis E) einschließlich des ersten Bildschirms auf dem Abschnitt angezeigt wird.

14. Verfahren nach Anspruch 12 oder 13, wobei jedes der Vielzahl vom Benutzer auswählbarer Objekte (521 bis 525) so konfiguriert ist, dass es durch die Benutzereingabe umgeschaltet wird.

15. Verfahren nach einem der Ansprüche 13 bis 14, umfassend ferner:
Einstellen des Größenverhältnisses der Vielzahl von Bildschirmen (A bis E), die einen gesamten aktiven Bereich der zweiten Anzeige (150) einschließlich des ersten Anzeigebereichs, des zweiten Anzeigebereichs und des dritten Anzeigebereichs einnehmen, zumindest auf der Grundlage einer zweiten Benutzereingabe zur Auswahl einer Begrenzungslinie zwischen den mehreren Bildschirmen (A bis E), im teilweise gefalteten Zustand (192, 501), in dem eine Vielzahl von Bildschirmen (A bis E) durch die Benutzereingabe ausgewählt ist.

## Revendications

1. Dispositif électronique (101), comprenant :
un boîtier pliable incluant un premier boîtier (111) ; un deuxième boîtier (112) couplé de manière rotative au premier boîtier (111), et un troisième boîtier (113) couplé de manière rotative au deuxième boîtier (112) ;
un premier afficheur (152) disposé sur un premier côté du boîtier pliable ;
un deuxième afficheur (150) disposé sur un deuxième côté du boîtier pliable et incluant une première zone d'affichage, une deuxième zone d'affichage et un troisième afficheur ;
un premier capteur (230) pour détecter un angle entre le premier boîtier (111) et le deuxième boîtier (112) ;
un deuxième capteur (230) pour détecter un angle entre le deuxième boîtier (112) et le troisième boîtier (113) ;
une mémoire (215) stockant des instructions ; et
au moins un processeur (210, 1120) pour exécuter les instructions, dans lequel au moins l'un processeur (210, 1120), lorsqu'il exécute les instructions, amène le dispositif à :
afficher, à travers le premier afficheur (152), un premier écran d'exécution d'une première application dans un état plié (191) du dispositif électronique (101) ;
identifier qu'un état du dispositif électronique (101) a passé de l'état plié à un état partiellement plié sur la base des informations du capteur fournies par le premier capteur et/ou le deuxième capteur (230) ;
afficher, sur au moins une zone d'affichage du deuxième afficheur (150), une pluralité d'objets visuels correspondant respectivement aux applications récemment exécutées ;
**caractérisé en ce que** :
en réponse à l'identification que l'état du dispositif électronique (101) a passé de l'état partiellement plié (192, 501) à un état déplié, sans saisie utilisateur concernant la pluralité d'objets visuels, afficher un deuxième écran de la première application dans au moins l'une zone d'affichage parmi la première zone d'affichage, la deuxième zone d'affichage et la troisième zone d'affichage du deuxième afficheur (150) ; et que
sur la base d'un état du dispositif électronique (101) ayant passé à un état déplié (193, 601) de l'état partiellement plié (192, 501) après la réception de la saisie utilisateur concernant la pluralité d'objets visuels, afficher au moins un écran correspondant à la saisie utilisateur dans au moins l'une parmi la première zone d'affichage, la deuxième zone d'affichage et la troisième zone d'affichage du deuxième afficheur (150).

2. Dispositif électronique (101) selon la revendication 1, dans lequel le premier boîtier (111) et le troisième boîtier (113) sont, dans l'état plié (191), configurés pour être pliés successivement par rapport au deuxième boîtier (112).

3. Dispositif électronique (101) selon la revendication 1, dans lequel le premier boîtier (111) est, dans l'état partiellement plié (192, 501), configuré pour être déplié par rapport au deuxième boîtier (112), dans lequel le troisième boîtier (113) est configuré pour être plié par rapport au deuxième boîtier (112).

4. Dispositif électronique (101) selon la revendication 1, dans lequel le premier boîtier (111) et le troisième boîtier (113) sont, dans l'état déplié (193, 601), configurés pour être dépliés par rapport au deuxième boîtier (112).

5. Dispositif électronique (101, 310, 1101) selon l'une quelconque des revendications 1 à 4, dans lequel la pluralité d'objets visuels inclut
une pluralité de captures d'écran des écrans qui ont été affichés sur la base d'une exécution d'une pluralité d'applications ; et
une pluralité d'objets à sélectionner par l'utilisateur (521 à 525) respectivement superposés sur la pluralité de captures d'écran.

6. Dispositif électronique (101, 310, 1101) selon les revendications 1 à 5, dans lequel chacun de la pluralité d'objets à sélectionner par l'utilisateur (521 à 525) est configuré pour être commuté à travers la saisie utilisateur.

7. Dispositif électronique (101) selon les revendications 1 à 6, dans lequel le processeur (210) est configuré pour :
ajuster, dans l'état partiellement plié (192, 501) dans lequel une pluralité d'écrans (A à E) sont sélectionnés à travers la saisie utilisateur, un ratio des tailles de la pluralité d'écrans (A à E) occupant une région active entière du deuxième afficheur (150) incluant la première zone d'affichage, la deuxième zone d'affichage et la troisième zone d'affichage, au moins sur la base d'une deuxième saisie utilisateur pour sélectionner une ligne de bordure entre la pluralité d'écrans.

8. Dispositif électronique (101) selon les revendications 1 à 7, dans lequel le processeur (210) est configuré pour :
afficher, à l'état déplié (193, 601) après la réception de la saisie utilisateur pour sélectionner une pluralité d'écrans (A à E), la pluralité d'écrans (A à E) qui est séparée par au moins l'une d'une première ligne de bordure entre la deuxième surface et la troisième surface ou d'une deuxième ligne de bordure entre la troisième surface et la quatrième surface.

9. Dispositif électronique (101) selon les revendications 1 à 8, dans lequel le processeur (210) est configuré pour :
afficher, à l'état déplié (193, 601) après la réception de la saisie utilisateur pour sélectionner une pluralité d'écrans (A à E) au nombre dépassant trois, la pluralité d'écrans (A à E) sur chacune des parties de la zone active qui sont également divisées par le nombre de la pluralité d'écrans (A à E).

10. Dispositif électronique (101) selon les revendications 1 à 9, dans lequel le processeur (210) est configuré pour :
afficher, dans l'état partiellement plié (192, 501), le ou les écrans (A à E) qui ont été affichés sur la base d'une ou plusieurs applications (1146) exécutées par le processeur (210).

11. Dispositif électronique (101) selon les revendications 1 à 10, dans lequel le processeur (210) est configuré pour :
afficher, sur la base de l'identification de la troisième surface et de la quatrième surface qui font face l'une à l'autre et de l'identification de la deuxième surface et de la troisième surface qui font face l'une à l'autre, au moins l'une application (1146) exécutée dans l'état plié (191) ;
afficher, sur la base de l'identification de la troisième surface et de la quatrième surface qui font face l'une à l'autre et de l'identification des directions de la deuxième surface et de la troisième surface qui sont identiques l'une à l'autre sur la base du capteur (230), les informations sur la base de l'état partiellement plié (192, 501) ;
afficher, sur la base de l'identification des directions de la deuxième surface, de la troisième surface et de la quatrième surface qui sont identiques l'une à l'autre sur la base de l'un ou plusieurs capteurs (230), au moins l'un écran correspondant à la saisie utilisateur sur la base de l'état déplié (193, 601).

12. Procédé d'un dispositif électronique (101), comprenant les étapes suivantes :
afficher, à travers le premier afficheur (152) du dispositif électronique (101), un premier écran d'exécution d'une première application dans un état plié (191) du dispositif électronique (101, 310, 1101) ;
identifier qu'un état du dispositif électronique (101) a passé de l'état plié à un état partiellement plié sur la base des informations du capteur fournies par un premier capteur (230) et/ou le deuxième capteur (230) ;
afficher, sur au moins une zone d'affichage d'un deuxième afficheur (150), une pluralité d'objets visuels correspondant respectivement aux applications récemment exécutées ;
**caractérisé par** les étapes suivantes :
en réponse à l'identification que l'état du dispositif électronique (101) a passé de l'état partiellement plié (192, 501) à un état déplié, sans saisie utilisateur concernant la pluralité d'objets visuels, afficher un deuxième écran de la première application dans au moins l'une zone d'affichage parmi une première zone d'affichage, une deuxième zone d'affichage et une troisième zone d'affichage du deuxième afficheur (150) du dispositif électronique (101) ;
et
sur la base d'un état du dispositif électronique (101) ayant passé à un état déplié (193, 601) de l'état partiellement plié (192, 501) après la réception de la saisie utilisateur concernant la pluralité d'objets visuels, afficher au moins un écran correspondant à la saisie utilisateur dans au moins l'une parmi la première zone d'affichage, la deuxième zone d'affichage et la troisième zone d'affichage du deuxième afficheur (150).

13. Procédé selon la revendication 12, comprenant en outre :
recevoir, tout en affichant la pluralité d'objets visuels incluant une pluralité d'écrans (A à E) incluant le premier écran sur la partie, la saisie utilisateur pour sélectionner au moins l'un écran parmi la pluralité d'écrans.

14. Procédé selon la revendication 12 ou 13, dans lequel chacun de la pluralité d'objets à sélectionner par l'utilisateur (521 à 525) est configuré pour être commuté à travers la saisie utilisateur.

15. Procédé selon l'une quelconque des revendications 13 à 14, comprenant en outre :
ajuster, dans l'état partiellement plié (192, 501) dans lequel une pluralité d'écrans (A à E) sont sélectionnés à travers la saisie utilisateur, un ratio des tailles de la pluralité d'écrans (A à E) occupant une région active entière du deuxième afficheur (150) incluant la première zone d'affichage, la deuxième zone d'affichage et la troisième zone d'affichage, au moins sur la base d'une deuxième saisie utilisateur pour sélectionner une ligne de bordure entre la pluralité d'écrans (A à E).
